(19) Europäisches Patentamt
European Patent Office
Office européen des brevets

(11) **EP 4 362 140 A1**

(12) **EUROPEAN PATENT APPLICATION**

(43) Date of publication:
**01.05.2024 Bulletin 2024/18**

(21) Application number: **23205214.2**

(22) Date of filing: **23.10.2023**

(51) International Patent Classification (IPC):
*H01M 4/66* (2006.01)     *H01M 4/70* (2006.01)
*H01M 4/74* (2006.01)     *H01M 4/76* (2006.01)
*H01M 4/80* (2006.01)

(52) Cooperative Patent Classification (CPC):
**H01M 4/661; H01M 4/667; H01M 4/70; H01M 4/74;
H01M 4/762; H01M 4/808;** H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2022 KR 20220141756**

(71) Applicant: **Samsung Electronics Co., Ltd.
Suwon-si, Gyeonggi-do 16677 (KR)**

(72) Inventors:
• **LEE, Myungjin
16678 Suwon-si (KR)**

• **KIM, Jirae
16678 Suwon-si (KR)**
• **SHON, Jeongkuk
16678 Suwon-si (KR)**
• **KIM, Yongsu
16678 Suwon-si (KR)**
• **KIM, Jusik
16678 Suwon-si (KR)**
• **JUNG, Changhoon
16678 Suwon-si (KR)**

(74) Representative: **Elkington and Fife LLP
Prospect House
8 Pembroke Road
Sevenoaks, Kent TN13 1XR (GB)**

(54) **ANODE FOR SOLID-STATE SECONDARY BATTERY, SOLID-STATE SECONDARY BATTERY INCLUDING THE SAME, AND METHOD OF PREPARING THE SAME**

(57)     An anode for a solid-state secondary battery, the anode including: a three-dimensional porous current collector including a plurality of pores having a lithiophilic property, and having a porosity of about 10 percent to about 99 percent, based on a total volume of the three-dimensional current collector, wherein pores of the plurality of the pores have a size and a pitch, and a ratio of the size to the pitch is about 0.1 to about 0.9; and a first anode active material layer disposed on a first side of the three-dimensional porous current collector, wherein the first anode active material layer is disposed in at least a portion of the pores of the three-dimensional porous current collector.

FIG. 1A

EP 4 362 140 A1

**Description**

FIELD OF THE INVENTION

The disclosure relates to an anode for a solid-state secondary battery, a solid-state secondary battery including the same, and a method of preparing the same.

BACKGROUND OF THE INVENTION

In line with recent demands in industry, batteries with high energy density and stability are actively being developed. For example, lithium-ion batteries are commercialized not only in the fields related to information-related devices and communication devices, but also in the automobile industry. In the automobile industry, safety is greatly emphasized as it affects human lives.

Lithium-ion batteries that are currently commercially available utilize liquid electrolytes containing a flammable organic solvent, and thus, in the event of a short-circuit, may undergo overheating and cause a fire. In this context, a solid-state secondary battery using a solid electrolyte is proposed.

Batteries using a solid electrolyte do not use flammable organic solvents, and thus, even in the event of a short-circuit, can greatly decrease the risk of fire or explosion. Therefore, such solid-state secondary batteries may be significantly safer than lithium-ion batteries using liquid electrolytes.

To increase energy density of such solid-state secondary batteries, lithium may be used as an anode active material. For example, lithium metal is known to have a specific capacity (capacity per unit mass) 10 times that of graphite that is generally used as an anode active material. Accordingly, using lithium as an anode active material, it is possible to produce a solid-state secondary battery having increased capacity with a thinner thickness. However, there remains a need for an improved anode.

SUMMARY OF THE INVENTION

Provided is an anode for a solid-state secondary battery, the anode capable of uniform lithium formation while ensuring lithium deposition space.

Provided are a solid-state secondary battery which has reduced cell thickness change upon charging/discharging and improved lifetime characteristics by including the anode, and a method of preparing the solid-state secondary battery.

Additional aspects will be set forth in part in the description which follows and, in part, will be apparent from the description, or may be learned by practice of the presented embodiments of the disclosure.

According to an aspect of the disclosure, an anode for a solid-state secondary battery includes:

a three-dimensional porous current collector including a plurality of pores having a lithiophilic property, and having a porosity of about 10 percent to about 99 percent, based on a total volume of the three-dimensional porous current collector, wherein pores of the plurality of the pores have a size and a pitch, and a ratio of the size to the pitch is about 0.1 to about 0.9; and

a first anode active material layer disposed on a first side of the three-dimensional porous current collector, wherein the first anode active material layer is disposed in at least a portion of the pores of the three-dimensional porous current collector.

The size of the pores of the three-dimensional porous current collector may be about 0.1 micrometer to about 100 micrometers, and the pitch between the pores of the three-dimensional porous current collector may be about 0.1 micrometer to about 100 micrometers.

The three-dimensional porous current collector may have a thickness of about 5 micrometers to about 100 micrometers.

A shape of a horizontal cross-section of the pore may be round, oval, triangular, square, rectangular, or hexagonal.

A surface of the plurality of the pores of the three-dimensional porous current collector may include a coating layer having a lithiophilic property, wherein the coating layer may be an oxide layer including copper, nickel, aluminum, stainless steel, titanium (Ti), iron (Fe), cobalt (Co), or a combination thereof.

The three-dimensional porous current collector has an oxygen peak at a binding energy of about 525 electronvolts to about 535 electronvolts, when analyzed by X-ray photoelectron spectroscopy (XPS), after sputtering with argon on the three-dimensional porous current collector at about 1.1 kilovolts or greater, for example, at about 1.1 kilovolts to about 3 kilovolts.

The three-dimensional porous current collector may include copper, nickel, aluminum, stainless steel, titanium, iron, cobalt, or a combination thereof.

The three-dimensional current collector may have a form of a foil, a foam, or a mesh.

The first anode active material layer may include a carbonaceous anode active material; a mixture of a carbonaceous anode active material and a first metal, a metalloid, or a combination thereof; a composite of a carbonaceous anode active material and the first metal the metalloid, or a combination thereof; or a combination thereof.

An interlayer may be further included on a first side of the first anode active material layer opposite a second side on which the three-dimensional porous current collector is disposed, and the interlayer may contain a metal or a metal alloy, which is capable of forming an alloy or compound with lithium.

The metal alloy may include a third element and a fourth element, and may be represented by M3M4, wherein in a solution of pH 7 or less, the third element may be present as an ion in the solution, and the fourth element may be insoluble in the solution,

wherein the third element may be Li, Na, K, Rb, Cs, Mg, Ca, Sr, Ba, Sc, V, Cr, Mn, Fe, Co, Ni, Cu, Zn, Ga, Al, Ge, Y, Zr, Hf, Nb, Tc, Rh, Cd, In, B, Si, P, F, Cl, Br, I, S, As, Sb, Bi, Ta, Re, Hg, Tl, Pb, or a combination thereof, optionally in combination with C, N, or a combination thereof, and
the fourth element may include Ti, Mo, Ru, Pd, Ag, Sn, Se, Te, W, Os, Ir, Pt, Au, or a combination thereof.

Here, the third element may be germanium, and the fourth element may be tellurium, cerium, or a combination thereof.

The molar ratio of the third element to the fourth element may be about 1:1 to about 1:500.

Here, the interlayer may include a $Ge_xTe_y$ alloy ($0<x\leq3$, $0<y\leq2$), a $Sb_xTe_y$ alloy ($0<x<1$, $0<y<1$), a $Ge_xSe_y$ alloy ($0<x\leq1$, $0<y\leq1$), a $Te_xGa_y$ alloy ($0<x\leq3$, $0<y\leq2$), a $Te_xZn_y$ ($0<x\leq1$, $0<y\leq2$), $Te_xBi_y$ ($0<x\leq3$, $0<y\leq2$), $Te_xSb_y$ ($0<x\leq3$, $0<y\leq2$), $Te_xBi_y$ ($0<x\leq6$, $0<y\leq14$), $Te_xAu_y$ ($0<x\leq2$, $0<y\leq1$), $Te_3As_4$ ($0<x\leq3$, $0<y\leq4$), $Te_3As_2$ ($0<x\leq3$, $0<y\leq2$), $Te_xSn_y$ ($0<x\leq1$, $0<y\leq1$), $Te_xSr_y$ ($0<x\leq1$, $0<y\leq1$), $Te_xY_y$ ($0<x\leq3$, $0<y\leq2$), $Te_xZr_y$ ($0<x\leq5$, $0<y\leq1$), $Te_xNb_y$ ($0<x\leq2$, $0<y\leq1$), $Te_xMo_y$ ($0<x\leq2$, $0<y\leq1$), $Te_xAg_y$ ($0<x\leq1$, $0<y\leq2$), $Te_xIn_y$ ($0<x\leq3$, $0<y\leq2$), $Te_xSn_y$ ($0<x\leq1$, $0<y\leq1$), $Te_xPd_y$ ($0<x\leq2$, $0<y\leq1$), $Bi_x$-$Sb_y$-$Te_z$ ($0<x\leq4$, $0<y\leq4$, $0<z\leq4$), $Bi_x$-$Se_y$-$Te_z$ ($0<x\leq4$, $0<y\leq4$, $0<z\leq4$), $Se_x$-$Sb_y$-$Te_z$ ($0<x\leq4$, $0<y\leq4$, $0<z\leq4$), $Ge_x$-$Sb_y$-$Te_z$ ($0<x\leq4$, $0<y\leq4$, $0<z\leq4$), $Ge_x$-$Sb_y$-$Se_z$-$Te_k$ ($0<x\leq4$, $0<y\leq4$, $0<z\leq4$, $0<k\leq4$), or a combination thereof.

The interlayer may include $Ge_1Te_1$, $Geo.sTe-i$, $Ge_{0.54}Te_1$, $Ge_{0.6}Te_1$, $Ge_{0.65}Te_1$, $Ge_{0.7}Te_1$, $Ge_{0.75}Te_1$, $Ge_{0.8}Te_1$, $Ge_{0.85}Te_1$, $Ge_{0.9}Te_1$, $Ge_{0.95}Te_1$, $Ge_{0.35}Te_{0.65}$, $Ga_2Te_3$, $TeZn_2$, $Bi_2Te_3$, $GeSe$, $Sb_2Te_3$, $Bi_{14}Te_6$, $Te$-$Pb$, $AuTe_2$, $As_4Te_3$, $As_2Te_3$, $SnTe$, $SrTe$, $Y2Te_3$, $ZrTe_5$, $NbTe_2$, $MoTe_2$, $Ag_2Te$, $CdTe$, $In_2Te_3$, $SnTe$, $PdTe_2$, $Bi$-$Sb$-$Te$, $Bi$-$Se$-$Te$, $Se$-$Sb$-$Te$, $Ge$-$Sb$-$Te$, $Ge$-$Sb$-$Se$-$Te$, or a combination thereof.

A second anode active material layer may be further included between the three-dimensional porous current collector and the first anode active material layer, wherein the second anode active material layer may contain a second metal material, and the second metal material may be lithium, a second metal, a lithium alloy, or a combination thereof.

The second metal may be silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof.

The lithium alloy may include lithium in combination with silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof.

The second metal may be lithium metal, a lithium alloy, or a combination thereof.

The carbonaceous anode active material may include an amorphous carbon, and the first anode active material may include indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, cerium, sodium, potassium, calcium, yttrium, bismuth, tantalum, hafnium, barium, vanadium, strontium, lanthanum, or a combination thereof.

The first anode active material layer may include a composite of a first particle composed of amorphous carbon and a second particle composed of a metal or a metalloid; or a mixture of a first particle composed of amorphous carbon and a second particle composed of a metal, or a metalloid, or a combination thereof, wherein the amount of the second particle may be about 1 weight percent (wt%) to about 60 wt%, with respect to a total weight of the composite.

According to another aspect, provided is a solid-state secondary battery including a cathode, an anode, and a solid electrolyte positioned between the cathode and the anode, wherein the anode may include the aforementioned anode.

Cell thickness change of the solid-state secondary battery may be 25 percent or less.

According to another aspect, provided is a method of preparing an anode, the method including: providing a three-dimensional porous current collector, which has a porosity of about 10 percent to about 99 percent, based on a total volume of the three-dimensional porous current collector, and includes a plurality of pores extending along a thickness direction, wherein pores of the plurality of the pores have a size and a pitch, and a ratio of the size to the pitch is about 0.1 to about 0.9; and disposing a first anode active material layer on the porous current collector to thereby prepare the anode.

According to another aspect, provided is a method of preparing a solid-state secondary battery, the method including: providing a three-dimensional porous current collector, which has a porosity of about 10 percent to about 99 percent, based on a total volume of the three-dimensional current collector, and includes a plurality of pores extending along a thickness direction, wherein pores of the plurality of the pores have a size and a pitch, and a ratio of the size to the pitch is about 0.1 to about 0.9,

disposing a first anode active material layer on a first side of the three-dimensional porous current collector to prepare an anode;
providing a cathode;
disposing a solid electrolyte on the cathode; and
disposing the anode on the solid electrolyte opposite the cathode wherein the first anode active material layer faces the solid electrolyte, to prepare the solid-state secondary battery.

The method may include further disposing a second portion of the first anode active material layer on the solid electrolyte.

The second portion of the first anode active material layer disposed on the solid electrolyte may have a second thickness, and a first portion of the first anode active material layer disposed on the three-dimensional porous current collector may have a first thickness, wherein the first thickness is greater than the second thickness.

The process of providing the three-dimensional porous current collector may include laser drilling.

The pores may be formed using a laser drilling technique.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1A is a schematic diagram of an embodiment of a structure of a solid-state secondary battery including an anode;
FIG. 1B is a schematic diagram of an embodiment of a structure of a solid-state secondary battery including an anode;
FIG. 2 is a plan view of an embodiment of a three-dimensional porous current collector;
FIG. 3 is a graph of thickness (micrometers, $\mu$m) vs. time (minutes, min), and shows the cell thickness over time in solid-state secondary batteries of Examples 1-3 and Comparative Examples 1-2;
FIG. 4 is a graph of potential (E, volts vs. Li$^+$/Li) vs. areal capacity (milliampere-hours per square centimeter, mAh/cm$^2$), and shows changes in potential as a function of capacity per unit area in a solid-state secondary battery of Example 2;
FIG. 5 is a graph of cycle number (number of cycles) vs. areal capacity (mAh/cm$^2$) and shows changes in areal capacity as a function of the number of cycles in a solid-state secondary battery of Example 2;
FIGS. 6A to 6C are each a graph of an intensity (arbitrary units, a.u.) vs. binding energy (electronvolts, eV), and each shows the results of X-ray photoelectron spectroscopy (XPS) analysis after sputtering with argon at 1 kilovolts (kV) for 1 minute (min) on an anode current collector part of a disassembled cell for which a charging/discharging evaluation has been completed, of the solid-state secondary battery of Example 1;
FIGS. 7A to 7C are each a graph of an intensity (a.u.) vs. binding energy (eV), and each shows the results of XPS analysis after sputtering with argon at 2 kV for 10 min on the anode current collector part of the disassembled cell for which the charging/discharging evaluation has been completed, of the solid-state secondary battery of Example 1;
FIG. 7D is an enlarged view of the indicated region A of FIG. 7C;
FIG. 7E is a scanning electron micrograph of the anode current collector and shows areas of Point 1 to Point 4 of the anode current collector;
FIG. 8A is an optical micrograph of a surface of a laser-drilled Cu foam current collector before charging in the solid-state secondary battery of Example 1; and
FIG. 8B is an optical micrograph of a surface of a laser-drilled Cu foam current collector after dissembling a test cell for which evaluation has been completed after complete charging at 0.2 C in the solid-state secondary battery of Example 1 used in FIG. 8A.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain various aspects. The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. Expressions such as "at least one of," when preceding a list of elements, modify the entire list of elements and do not modify the individual elements of the list.

Hereinbelow, one or more embodiments will be described in greater detail with reference to the accompanied drawings. In the drawings hereinbelow, like reference numerals are used to denote like features, and the size of each feature illustrated in the drawings may be exaggerated for clarity and convenience of description. In addition, the examples described below are provided for illustrative purposes only, and various modifications may be possible from such examples.

Hereinbelow, when an element is described as being "above" or "on" another element, the element may be immediately on top of the another element with physical contact, or may be above the another element without contact. In contrast, when an element is referred to as being "directly on" another element, there are no intervening elements present.

As used herein, the singular forms are intended to include the plural forms as well, unless the context clearly indicates otherwise. Also, when one element is described as "comprising," and/or "including" another element, this does not preclude the presence or addition of one or more other elements, unless otherwise indicated.

It will be understood that, although the terms "first," "second," "third," etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, "a first element," a first component," "a first region," "a first layer," or "a first section" discussed below could be termed a second element, a second component, a second region, a second layer, or a second section without departing from the teachings herein.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (e.g., the limitations of the measurement system). For example, "about" can mean within one or more standard deviations, or within $\pm$ 30%, 20%, 10% or 5% of the stated value. Endpoints of ranges may each be independently selected.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Hereinbelow, an anode for a solid-state secondary battery according to an embodiment, a solid-state secondary battery including the same, and a method of preparing the same will be described in greater detail with reference to the accompanied drawings.

A solid-state secondary battery in a pre-charging state or a discharged state may have an "Li-free" (or anode active material-free) structure. The solid-state secondary battery may form lithium metal or a lithium alloy anode active material by electro-depositing Li from the cathode during charge. The solid-state secondary battery having such a structure undergoes lithium electrodeposition and lithium dissolution repeatedly during charge and discharge, and exhibits a thickness change as voids are formed between the lithium metal or the lithium alloy anode and the solid electrolyte layer. In addition, due to uneven growth of lithium formed during charge, the solid-state secondary battery may suffer a short-circuit and degradation in lifetime characteristics.

To address the aforementioned or other issues, provided is an anode for a solid-state secondary battery, including a three-dimensional porous current collector having a lithiophilic property and a pore size and pore pitch with a uniform pattern. Lithiophilic herein refers to having a tendency to be attracted to Li. Lithiophilicity of the current collector herein can be determined by XPS analysis, based on the presence of an oxygen peak at a binding energy of about 525 eV to about 535 eV of an oxide layer after sputtering with argon on the current collector at 1.1 kV or greater.

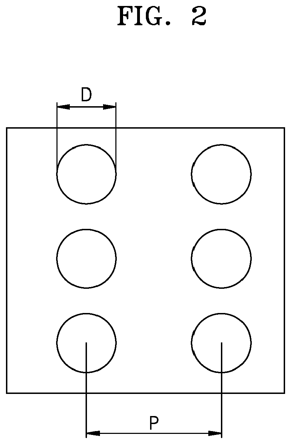

The pore size herein refers to an average diameter if the pore is spherical, as shown in FIG. 2, and refers to an average major axis length if the pore is not spherical.

In the present specification, the pore size may be measured by mercury intrusion, a gas adsorption, or by scanning electron microscope (SEM) analysis. The gas adsorption method may include the Brunauer-Emmett-Teller (BET) method or the Barrett-Joyner-Halenda (BJH) method.

In the present specification, the pore size refers to an average pore size. In embodiments of the disclosure, the pore size may be measured using the BET method. The BET method is described in Brunauer, Stephen; Emmett, P. H.; Teller, Edward (1938). "Adsorption of Gases in Multimolecular Layers," Journal of the American Chemical Society. 60 (2): 309-319. In addition, the SEM method may evaluate a pore size using an image analysis.

The anode may include a three-dimensional porous current collector comprising a plurality of pores having a lithiophilic property, wherein pores of the plurality of the pores have a size and a pitch, and a ratio of the size to the pitch may be about 0.1 to about 0.9, about 0.2 to about 0.8, or 0.3 to about 0.7, and a porosity of the three-dimensional porous current collector of about 10 percent (%) to about 99 %, based on a total volume of the current collector; and a first anode active material layer disposed on a first side of the three-dimensional porous current collector, wherein the first anode active material layer is further disposed in at least a portion of the pores of the three-dimensional porous current collector. In an aspect, the first anode active material layer is disposed on a surface of the pores of the three-dimensional porous current collector, wherein the surface may be an inner surface of the pores. The term "porosity" refers to the ratio of the volume occupied by pores to the total volume of a structure, and % is used as its unit, and can be used interchangeably with terms such as porosity and porosity.

The measurement of the porosity is not particularly limited, and may be measured by, for example, a BET (Brunauer-Emmett-Teller) measurement method or a mercury permeation method (Hg porosimeter) according to an embodiment of the present invention.

Porosity refers to the volume ratio occupied by pores relative to the total volume of the porous current collector, and can be calculated as (weight of porous current collector)/(measured volume of porous current collector X theoretical density of current collector).

The pores (e.g., the plurality of the pores) may have a patterned size and pitch, and for example, the pattern may be a regular pattern.

In an aspect, the pore may have a form of a hole.

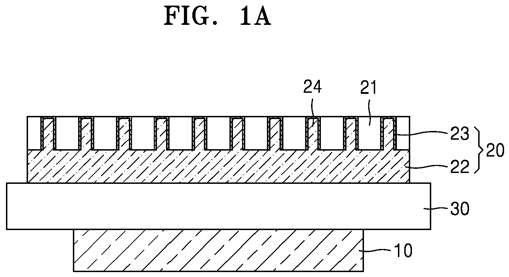

FIG. 1A is a cross sectional view schematically showing a structure of a solid-state battery according to an embodiment;

With reference to FIG. 1A, a solid-state secondary battery may include a solid electrolyte 30 positioned between an anode 20 and a cathode 10. As shown in FIG. 1A, the anode 20 may include a three-dimensional porous current collector 21 provided with a plurality of pores 24 extending in a thickness direction and a first anode active material layer 22 arranged on a first side of the three-dimensional porous current collector 21. The first anode active material layer 22 may be included also in at least a portion of the pores 24 of the three-dimensional porous current collector 21. The pores 24 may be partially or completely filled with the first anode active material layer 22.

In FIG. 1A, the pores 24 are shown as being completely filled with the first anode active material layer 22. In an aspect, the pores 24 may be only partially filled with the first anode active material layer 22.

The first anode active material layer 22 may have a monolayer structure as shown in FIG. 1A, or may have a multilayer structure.

The above-described three-dimensional porous current collector may ensure a greater volume proportion of active material and larger reactive surface compared to that of a two-dimensional porous current collector having a flat surface-type structure, and thus, may increase the capacity and energy density of the solid-state secondary battery.

The pores of the three-dimensional porous current collector may have a diameter D as shown in FIG. 2, i.e., a size, of about 100 nanometers (nm) (0.1 micrometer ($\mu$m)) to about 10 $\mu$m, about 500 nm (0.5 $\mu$m) to about 100 $\mu$m, about 0.8 $\mu$m to about 100 $\mu$m, about 1 $\mu$m to about 80 $\mu$m, about 1 $\mu$m to about 70 $\mu$m, about 1 $\mu$m to about 50 $\mu$m, about 9 $\mu$m to about 25 $\mu$m. In particular, the pores may have a pitch therebetween of about 100 nm (0.1 $\mu$m) to about 100 $\mu$m, about 1 $\mu$m to about 100 $\mu$m, about 3 $\mu$m to about 100 $\mu$m, about 5 $\mu$m to about 100 $\mu$m, about 10 $\mu$m to about 100 $\mu$m, about 20 $\mu$m to about 100 $\mu$m, or about 22 $\mu$m to about 100 $\mu$m.

Pore size to pore pitch ratio, a ratio of the size to the pitch, may be about 0.1 to about 0.9, about 0.1 to about 0.8, about 0.1 to about 0.7, about 0.1 to about 0.6, 0.2 to about 0.5, about 0.25 to about 0.5, or about 0.4 to about 0.5. When the pore size to pore pitch ratio is within the above ranges, cell thickness changes of the solid-state secondary battery after charging and discharging may be reduced. Since the use of such an anode suppresses void formation and minimizes cell thickness changes, the use of external material may be eliminated, thus increasing energy density. In addition, uniform lithium deposition in the porous current collector may prevent in advance the solid-state secondary battery from degradations after charging and discharging.

As shown in FIG. 2, the pore pitch P refers to the distance by which the centers of two adjacent pores are spaced apart. In the present specification, the pitch refers to an average pitch. The pore pitch may be measured using a pore size evaluation method, and may be measured using, for example, a scanning electron microscope (SEM).

Due to the three-dimensional structure of the three-dimensional porous current collector having the size and pitch of pores, excellent output characteristics and improvement in adhesion with the first anode active material layer may be achieved.

The porosity of the three-dimensional porous current collector may be selected within a range that can maintain the framework of the three-dimensional porous current collector, and for example, may be about 10% to about 99%, about 50% to about 99% or about 50% to about 60%, based on a total volume of the three-dimensional porous current collector. Here, the porosity % may refer to volume percent (vol%) for example. When the porosity is within the above ranges, more uniform deposition of lithium within the pores may be achieved.

The three-dimensional porous current collector may have a thickness of about 5 $\mu$m to about 100 $\mu$m, about 10 $\mu$m to about 100 $\mu$m, or about 10 $\mu$m to about 50 $\mu$m. When the thickness of the three-dimensional porous current collector is within the above ranges, the preparation of a solid-state secondary battery having excellent lifetime and energy density characteristics may be possible.

In the present specification, when layers do not have a uniform thickness, the thickness of said layers may be defined as an average value calculated from their respective thicknesses.

A shape of a horizontal cross-section of the pore is not limited and may have, for example, a circular shape, an oval shape, a triangular shape, a square shape, a rectangular shape, a hexagonal shape, or a combination thereof.

As shown in FIG. 1A, on a surface of the pore 24 of the three-dimensional porous current collector 21, a lithiophilic coating layer 23 may be formed. As described above, the three-dimensional porous current collector 21, due to its lithiophilic property, may ensure lithium deposition space, and thus effectively suppress uneven lithium formation. In particular, the formation of the lithiophilic coating layer 23 in the pores 24 permits free transportation of solid lithium ions and therefore, in a solid state, the solid-state secondary battery may have a higher capacity per unit weight and achieve faster charging and improved cell characteristics.

The lithiophilic coating layer 23 may be an oxide layer including copper, nickel, aluminum, stainless steel, titanium (Ti), iron (Fe), cobalt (Co), or a combination thereof.

The lithiophilic coating layer 23 may be, for example, a metal oxide layer which is formed on the surface of pores 24 by application of external heat through laser drilling during the process of forming pores 24 in the three-dimensional porous current collector 21. Examples of such metal oxide layers may include a copper oxide layer, a nickel oxide layer, or an aluminum oxide layer.

The presence of lithiophilic coating layer 23 may be confirmed by X-ray photoelectron spectroscopy (XPS) analysis after sputtering with argon using an accelerating voltage of 1.1 kilovolts (kV) or greater, for example about 1.1 kV to about 3 kV, for about 1 minute to about 20 minutes, for example, for 10 minutes. Oxygen peak (O1s) appears at a binding energy of about 525 electronvolts (eV) to about 535 eV when analyzed by XPS.

The metal oxide lithiophilic coating layer 23 may have a thickness of greater than 10 nanometers (nm), about 10 nm to about 200 nm, for example, about 12 nm to about 30 nm, and may be differentiated from a native oxide layer with a thickness of 10 nm or less that is formed from a metal of an anode current collector material that comes in contact with air. Such a native oxide layer has a thinner thickness than that of the metal oxide layer formed as the lithiophilic coating layer 23, and has weaker adhesion to the porous current collector. The native oxide layer may be removed in milder sputtering conditions than the metal oxide layer provided as the lithophilic coating layer 23.

According to an embodiment, the argon ion sputtering conditions during XPS analysis to confirm the presence of the lithophilic metal oxide layer may be, for example, 2 kV, 10 min sputtering, and the mild conditions in which the native oxide layer is removed may be, for example, 1 kV, 1 min sputtering.

The three-dimensional porous current collector 21 may comprise a material that does not react with lithium, for example, a material that does not form an alloy or a compound with lithium. The material of the three-dimensional porous current collector 21 may be, for example, copper (Cu), stainless steel, titanium (Ti), iron (Fe), cobalt (Co), nickel (Ni), or a combination thereof, and is not limited thereto, and may be any suitable material available as an electrode current collector in the art. The three-dimensional porous current collector 21 may be composed of one of the aforementioned metals or an alloy of two or more metals, or a coating material. The three-dimensional porous current collector 21 may be, for example, a plate shape, or a foil shape.

The first anode active material layer 22 may include: a carbonaceous anode active material; a mixture of a carbonaceous anode active material and a first metal, a metalloid, or a combination thereof; a composite of a carbonaceous anode active material and a first metal, a metalloid, or a combination thereof; or a combination thereof.

The carbonaceous anode active material may include an amorphous carbon, and the first metal or the metalloid may include indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, cerium, sodium, potassium, calcium, yttrium, bismuth, tantalum, hafnium, barium, vanadium, strontium, lanthanum, or a combination thereof.

Examples of the amorphous carbon may include carbon black (CB), acetylene black (AB), furnace black (FB), Ketjen black (KB), graphene, carbon nanotubes, carbon nanofibers, or a combination thereof. However, the amorphous carbon is not necessarily limited to the aforementioned examples, and may be any suitable amorphous carbon.

The first anode active material layer 22 may include a composite of a first particle composed of amorphous carbon and a second particle composed of a metal or a metalloid, or a mixture of the first particle composed of the amorphous carbon and the second particle composed of the metal or the metalloid. Here, the amount of the second particle may be about 1 weight percent (wt%) to about 60 wt%, with respect to a total weight of the composite or the mixture. The amount of the second particle may be about 8 wt% to about 60 wt%, about 10 wt% to about 50 wt%, about 15 wt% to about 40 wt%, or about 20 wt% to about 30 wt%, with respect to the total weight of the composite or the mixture. By including the second particle in an amount in the above ranges, the solid-state secondary battery may have further improved cycle characteristics.

For example, the first anode active material layer may have a thickness of about 10 nm to about 10 $\mu$m, about 100 nm to about 10 $\mu$m, about 200 nm to about 10 $\mu$m, about 300 nm to about 10 $\mu$m, about 400 nm to about 10 $\mu$m, about 500 nm to about 10 $\mu$m, about 1 $\mu$m to about 10 $\mu$m, about 1 $\mu$m to about 9 $\mu$m, about 1 $\mu$m to about 8 $\mu$m, about 2 $\mu$m to about 7 $\mu$m, or about 3 $\mu$m to about 7 $\mu$m. As the first anode active material layer has the thickness in the above ranges, a short-circuit in the solid-state secondary battery may be prevented, and cycle characteristics thereof may be improved.

The first anode active material layer, due to including carbonaceous active material, may contain voids.

The first anode active material layer after discharging may include empty space formed therein.

The first anode active material layer may include, for example, amorphous carbon and silicon-based (i.e., silicon-containing) anode active material. Examples of the silicon-based anode active material may include silicon, a silicon-carbon complex, $SiO_x$ (0<x<2), an Si-Q alloy (Q is alkali metals, alkaline earth metals, elements of Group 13, elements of Group 14, elements of Group 15, elements of Group 16, transition metals, rare-earth elements, or a combination thereof, but not Si), or a combination thereof. Alternatively, the silicon-based anode active material may be a mixture of at least one of the aforementioned components with $SiO_2$. Element Q may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

A second anode active material layer (not shown) may be further included between the three-dimensional porous current collector 21 and the first anode active material layer 22, wherein the second anode active material layer may contain a second metal material and the second metal material may be lithium, a second metal, a lithium alloy, or a combination thereof.

The second metal may be silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof.

The lithium alloy may include lithium in combination with silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof.

The second metal may be lithium metal, a lithium alloy, or a combination thereof.

As the first anode active material layer includes carbonaceous active material, the first anode active material layer may change in volume according to volume changes of the second anode active material layer. For example, when the second anode active material layer expands during charging, such volume expansion of the second anode active material may be absorbed and ameliorated.

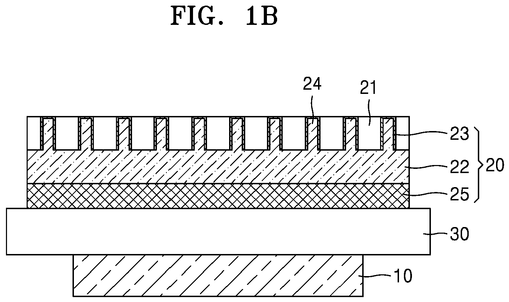

FIG. 1B shows a structure of a solid-state second battery according to another embodiment.

The solid-state secondary battery in FIG. 1B is identical to the solid-state secondary battery in FIG. 1A except that it further includes an interlayer 25 positioned between the solid electrolyte 30 and the first anode active material layer 22.

The solid-state secondary battery in FIG. 1A and FIG. 1B may have "Li-free" (or anode active material-free) structure in an assembled state, that is, in a pre-charge state or a discharged state.

For example, the interlayer 25 may include a metal or a metal alloy capable of forming an alloy or compound by reacting with lithium. The metal alloy may contain at least one metal, and for example, may contain a non-metal.

The metal alloy may be represented by M3M4 wherein in solutions of pH 7 or less, a third element (M3) may be a first element that is present as an ion in the solution, and a fourth element (M4) may be a second element that maintains a solid state, thus, insoluble in the solution. According to an embodiment, when the M3M4 metal alloy is immersed in an electrolyte with pH 7 or less, selective dissolution takes place to form a first anode active material layer having a nanoporous structure.

The lithium ion reduction potential of the third element (M3) may be different from the lithium ion reduction potential of M4. The difference in lithium ion reduction potential between the third element (M3) and the fourth element (M4) may be, for example, about 0.05 volt (V) or greater, about 0.1 V or greater, about 0.2 V or greater, about 0.3 V or greater, about 0.4 V or greater, or about 0.5 V or greater. The difference in lithium ion reduction potential between the third element (M3) and the fourth element (M4) may be about 2 V or less, about 0.05 V to about 2 V, or about 0.1 V to about 1.5 V. In addition, the third element (M3) and the fourth element (M4), when forming an alloy with Li, have a low mobility and have an eutectic temperature of about 300 °C or greater, about 600 °C or greater, for example, about 600 °C to about 1,200 °C, or about 650 °C to about 1,000 °C.

Here, M3 may be Li, Na, K, Rb, Cs, Mg, Ca, Sr, Ba, Sc, V, Cr, Mn, Fe, Co, Ni, Cu, Zn, Ga, Al, Ge, Y, Zr, Hf, Nb, Tc, Rh, Cd, In, B, Si, P, F, Cl, Br, I, S, As, Sb, Bi, Ta, Re, Hg, Tl, Pb, or a combination thereof, optionally in combination with carbon (C), nitrogen (N), or a combination thereof. Here, M4 may include Ti, Mo, Ru, Pd, Ag, Sn, Se, Te, W, Os, Ir, Pt, Au, or a combination thereof.

M3 may be germanium (Ge), and M4 may be tellurium (Te), cerium (Se), or a combination thereof.

In the M3M4 alloy, the molar ratio of M3 to M4 may be stoichiometrically controlled within a range in which an alloy can be formed. According to an embodiment, the molar ratio of M3 to M4 may have a range of about 1:1 to about 1:500, about 1:1 to about 1:300, or about 1:1.5 to about 1:100. Within the above molar ratios, for example, pores may be formed by an acid treatment of the first anode active material layer.

According to another embodiment, the molar ratio of M3 to M4 may have a range of about 2.5:1 to about 1:500, about 1:1 to about 1:500, about 1:1 to about 1:300, or about 1:1.5 to about 1:100. Within the above molar ratios, for example, pores may be formed by treating the first anode active material layer with a pore-forming agent. The molar ratio of M3 to M4 may be confirmed by energy dispersive X-ray spectroscopy (EDS) analysis or XPS analysis. When the mixing molar ratio of M3 to M4 is within the above ranges, a high lithium diffusion may be maintained, and a solid-state secondary battery with improved high-rate characteristics and lifetime characteristics may be prepared by reducing the interfacial resistance of anode layer and solid electrolyte layer.

The interlayer may be prepared by forming an alloy layer which has low particle mobility and aggregation at an interface adjacent with the solid electrolyte layer while maintaining high lithium diffusion during the process of alloying/dealloying of lithium.

The metal alloy due to its low mobility maintains its original state during charging and discharging. For example, when the first anode active material layer is made of a metal with low mobility, migration of Li metal occurs when charging, but a GeTe alloy may maintain the shape of original layer upon charging and discharging. Such a trend in mobility tends to increase when eutectic temperature when alloying with lithium (Li) is low. For Li-Ge alloys and Li-Te alloys, the eutectic temperature when alloying with lithium (Li) may be, for example, about 600 °C or greater.

A solid-state secondary battery having an interlayer containing the above-described metal alloy may have improved high-rate characteristics by reducing the interfacial resistance of a battery cell. In addition, by allowing lithium to be precipitated mainly at the interface of the second anode active material layer and the anode current collector, lifetime characteristics may be improved by continuously alleviating current crowding during a long-term operation at a high current density.

The interlayer may be made of a metal alloy layer which has a fast Li diffusion and can be reversibly re-alloyed after alloying/dealloying with lithium.

As the lithium ion diffusivity at 25 °C at the interlayer is controlled to have about $1 \times 10^{-14}$ cm$^2$/sec or greater, lithium introduced into the first anode active material layer may be rapidly migrated to the second anode active material layer.

In addition, the first anode active material layer may have further increased adhesion with the second anode active material layer if an acid treatment of the first anode active material layer is performed prior to bonding to the second anode active material. As a result, adhesion between the solid electrolyte layer and the anode layer can be maintained so that a solid-state secondary battery having improved long-term lifetime can be prepared.

The interlayer 25 may include a metal or a metal alloy that forms an alloy or a compound by reacting with lithium. Metal alloys have high lithium diffusion and low mobility of particles, and thus may maintain stable interfacial contact during high-rate charging/discharging and even after charge and discharge processes, may maintain a phase with fast lithium diffusion. Further forming an interlayer 25 may further improve adhesion between the first anode active material layer and the solid electrolyte layer, and may prevent current crowding and effectively prevent a short-circuit.

The metal alloy may include a $Ge_xTe_y$ alloy ($0<x\leq3$, $0<y\leq2$), a $Sb_xTe_y$ alloy ($0<x<1$, $0<y<1$), a $Ge_xSe_y$ alloy ($0<x\leq1$, $0<y\leq1$), a $Te_xGa_y$ alloy ($0<x\leq3$, $0<y\leq2$), a $Te_xZn_y$ ($0<x\leq1$, $0<y\leq2$), $Te_xBi_y$ ($0<x\leq3$, $0<y\leq2$), $Te_xSb_y$ ($0<x\leq3$, $0<y\leq2$), $Te_xBi_y$ ($0<x\leq6$, $0<y\leq14$), $Te_xAu_y$ ($0<x\leq2$, $0<y\leq1$), $Te_3As_4$ ($0<x\leq3$, $0<y\leq4$), $Te_3As_2$ ($0<x\leq3$, $0<y\leq2$), $Te_xSn_y$ ($0<x\leq1$, $0<y\leq1$), $Te_xSr_y$ ($0<x\leq1$, $0<y\leq1$), $Te_xY_y$ ($0<x\leq3$, $0<y\leq2$), $Te_xZr_y$ ($0<x\leq5$, $0<y\leq1$), $Te_xNb_y$ ($0<x\leq2$, $0<y\leq1$), $Te_xMo_y$ ($0<x\leq2$, $0<y\leq1$), $Te_xAg_y$ ($0<x\leq1$, $0<y\leq2$), $Te_xIn_y$ ($0<x\leq3$, $0<y\leq2$), $Te_xSn_y$ ($0<x\leq1$, $0<y\leq1$), $Te_xPd_y$ ($0<x\leq2$, $0<y\leq1$), $Bi_x$-$Sb_y$-$Te_z$ ($0<x\leq4$, $0<y\leq4$, $0<z\leq4$), $Bi_x$-$Se_y$-$Te_z$ ($0<x\leq4$, $0<y\leq4$, $0<z\leq4$), $Se_x$-$Sb_y$-$Te_z$ ($0<x\leq4$, $0<y\leq4$, $0<z\leq4$), $Ge_x$-$Sb_y$-$Te_z$ ($0<x\leq4$, $0<y\leq4$, $0<z\leq4$), $Ge_x$-$Sb_y$-$Se_z$-$Te_k$ ($0<x\leq4$, $0<y\leq4$, $0<z\leq4$, $0<k\leq4$), or a combination thereof.

The metal alloy may be, for example, a $Ge_xTe_y$ alloy ($0<x\leq2$, $0<y\leq1.5$) or a $Ge_xTe_y$ alloy ($0<x\leq1$, $0<y\leq1$).

The metal alloy may be $Ge_1Te_1$, $Ge_{0.35}Te_{0.65}(Ge_{0.7}Te_{1.3})$, $Ge_{0.5}Te_1(Ge_1Te_2)$, $Ge_{0.54}Te_1(Ge_{1.08}Te_2)$, $Ge_{0.6}Te_1(Ge_{1.2}Te_2)$, $Ge_{0.65}Te_1(Ge_{1.3}Te_2)$, $Ge_{0.7}Te_1(Ge_{1.4}Te_2)$, $Ge_{0.75}Te_1(Ge_{1.5}Te_2)$, $Ge_{0.8}Te_1(Ge_{1.6}Te_2)$, $Ge_{0.85}Te_1(Ge_{1.7}Te_2)$, $Ge_{0.9}Te_1(Ge_{1.8}Te_2)$, $Ge_{0.95}Te_1(Ge_{1.9}Te_2)$, $Ga_2Te_3$, $TeZn_2$, $Bi_2Te_3$, $GeSe$, $Sb_2Te_3$, $Bi_{14}Te_6$, Te-Pb, $AuTe_2$, $As_4Te_3$, $As_2Te_3$, SnTe, SrTe, $Y_2Te_3$, $ZrTe_5$, $NbTe_2$, $MoTe_2$, $Ag_2Te$, CdTe, $In_2Te_3$, SnTe, $PdTe_2$, Bi-Sb-Te, Bi-Se-Te, Se-Sb-Te, Ge-Sb-Te, Ge-Sb-Se-Te, or a combination thereof.

In the metal alloy M3M4, the molar ratio of M3 to M4 may be about 1:1 to about 1:500, about 1:1 to about 1:300, about 1:1 to about 1:200, about 1:5 to about 1:180, about 1:8 to about 1:100, or about 1:1.85 to about 1:50.

The metal alloy may be, for example, a binary alloy of GeTe. Such metal alloys have low fluidity compared to monometallic metals, such as silver, and thus may maintain stable interfacial contact during high-rate charging/discharging, and even after alloying/dealloying with Li, may maintain a phase with fast Li diffusion (rhombohedral structure) and thus does not act as a kinetic barrier. As the interlayer 25 includes the M3M4 metal alloy, prevention of short-circuits in a solid-state secondary battery and improvement in cycle characteristics thereof may be achieved.

When the metal alloy layer includes a Ge-Te alloy, the Ge-Te alloy may include Ge and Te in a molar ratio of about, prior to an acid treatment, about 2.5:1 to about 1:500, about 1:1 to about 1:500, about 1:1 to about 1:300, about 1:1 to about 1:200, about 1:5 to about 1:180, about 1:8to about 1:150, or about 1:10 to about 1:130. In addition, after the acid treatment, the molar ratio of Ge to Te in the Ge-Te alloy may be about 1:1 to about 1:500, about 1:1.5to about 1:100, about 1:5 to about 1:50, about 1:7 to about 1:30, or about 1:8 to about 1:20.

The interlayer 25, for example, may contain a lithium-free composite such as a GeTe composite, at the time of battery assembly, but after pressing and/or battery charging, may transform to a lithium-containing composite.

The interlayer 25 may have a thickness of about 10 nm to about 500 nm, about 15 nm to about 480 nm, about 20 nm to about 450 nm, about 30 nm to about 420 nm, for example, about 50 nm to about 300 nm. When the interlayer 25 is within the above ranges, a solid-state secondary battery having improved resistance and capacity characteristics may be prepared.

By including a metal, the interlayer 25 may induce faster diffusion of lithium ions introduced through the solid electrolyte 30 during a charging process. Accordingly, even when lithium ions are introduced in a locally concentrated manner due to an irregular surface of the solid electrolyte 30, lithium ions may be evenly distributed on the entire anode layer 20 by fast diffusion via the interlayer 22.

Between the three-dimensional porous current collector 21 and the first anode active material layer 22, the second anode active material layer (not illustrated) may be further disposed. The second anode active material layer may be added during battery assembly. Alternatively, the second anode active material layer may be a precipitation layer formed after charging the battery.

A thickness of the second anode active material layer is not particularly limited but may be, for example, about 1 $\mu$m to about 1,000 $\mu$m, about 1 $\mu$m to about 500 $\mu$m, about 1 $\mu$m to about 200 $\mu$m, about 1 $\mu$m to about 150 $\mu$m, about 1 $\mu$m to about 100 $\mu$m, or about 1 $\mu$m to about 50 $\mu$m. When the thickness of the second anode active material layer is within the above ranges, the second anode active material layer may act as a lithium reservoir and improve cycle characteristics.

The solid-state secondary battery may have a cell thickness change of 25 % or less, about 1 % to about 25 %, or 1% or greater and less than 24%.

Here, the cell thickness change refers to a cell thickness change of the solid-state secondary battery after discharging, compared to a thickness of the solid-state secondary battery after charging. In an aspect the cell thickness change may be according to the formula

$$\text{Thickness change} = (T_d - T_c)/T_c \times 100\%$$

wherein $T_d$ is the thickness of the cell after discharging and $T_c$ is the thickness of the cell after charging. The solid-state secondary battery including the first anode active material layer having the above thickness change may exhibit excellent cycle characteristics.

A cathode 10 of the solid-state secondary battery may include a cathode current collector 11 and a cathode active material layer.

For example, the cathode current collector may utilize a plate, or a foil, made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

For example, the cathode active material layer may include a cathode active material.

The cathode active material may be capable of intercalating and deintercalating lithium ions in a reversible manner. Examples of the cathode active material may include a lithium transition metal oxide, such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, lithium ion phosphate, or a combination thereof; and nickel sulfide, copper sulfide, lithium sulfide, iron oxide, vanadium oxide, or a combination thereof. Without being limited to the aforementioned examples, the cathode active material may be any suitable material available as a cathode active material in the art. The cathode active material may be a single material or a mixture of two or more materials.

The lithium transition metal oxide may be, for example, a compound represented by any one of the following formulas: $Li_aA_{1-b}B'_bD'_2$ (In the formula, $0.90 \le a \le 1$ and $0 \le b \le 0.5$); $Li_aE_{1-b}B'_bO_{2-c}D'_c$ (In the formula, $0.90 \le a \le 1$, $0 \le b \le 0.5$, and $0 \le c \le 0.05$); $LiE_{2-b}B'_bO_{4-c}D'_c$ (In the formula, $0 \le b \le 0.5$, and $0 \le c \le 0.05$); $Li_aNi_{1-b-c}Co_bB'_cD'_\alpha$ (In the formula, $0.90 \le a \le 1$, $0 \le b \le 0.5$, $0 \le c \le 0.05$, and $0 < \alpha \le 2$); $Li_aNi_{1-b-c}Co_bB'_cO_{2-\alpha}F'_\alpha$ (In the formula, $0.90 \le a \le 1$, $0 \le b \le 0.5$, $0 \le c \le 0.05$, and $0 < \alpha < 2$); $Li_aNi_{1-b-c}Co_bB'_cO_{2-\alpha}F'_2$ (In the formula, $0.90 \le a \le 1$, $0 \le b \le 0.5$, $0 \le c \le 0.05$, and $0 < \alpha < 2$); $Li_aNi_{1-b-c}Mn_bB'_cD'_\alpha$ (In the formula, $0.90 \le a \le 1$, $0 \le b \le 0.5$, $0 \le c \le 0.05$, and $0 < \alpha \le 2$); $Li_aNi_{1-b-c}Mn_bB'_cO_{2-\alpha}F'_\alpha$ (In the formula, $0.90 \le a \le 1$, $0 \le b \le 0.5$, $0 \le c \le 0.05$, and $0 < \alpha < 2$); $Li_aNi_{1-b-c}Mn_bB'_cO_{2-\alpha}F'_2$ (In the formula, $0.90 \le a \le 1$, $0 \le b \le 0.5$, $0 \le c \le 0.05$, and $0 < \alpha < 2$); $Li_aNi_bE_cG_dO_2$ (In the formula, $0.90 \le a \le 1$, $0 \le b \le 0.9$, $0 \le c \le 0.5$, and $0.001 \le d \le 0.1$); $Li_aNi_bCo_cMn_dGeO_2$ (In the formula, $0.90 \le a \le 1$, $0 \le b \le 0.9$, $0 \le c \le 0.5$, $0 \le d \le 0.5$, and $0.001 \le e \le 0.1$); $Li_aNiG_bO_2$ (In the formula, $0.90 \le a \le 1$, and $0.001 \le b \le 0.1$); $Li_aCoG_bO_2$ (In the formula, $0.90 \le a \le 1$, and $0.001 \le b \le 0.1$); $Li_aMnG_bO_2$ (In the formula, $0.90 \le a \le 1$, and $0.001 \le b \le 0.1$); $Li_aMn_2G_bO_4$ (In the formula, $0.90 \le a \le 1$, and $0.001 \le b \le 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); $LiFePO_4$, or a combination thereof. In the above compound, A may be Ni, Co, Mn, or a combination thereof; B' may be Al, Ni, Co, Mn, Cr, Fe, Mg, Sr, V, a rare-earth element, or a combination thereof; D' may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof. A compound having a coating layer added on a surface of the above compound may also be used. Furthermore, a mixture of the above compound with a compound having a coating layer added thereon may also be used. The coating layer added on the surface of the above compound may include, for example, compounds of a coating element, such as oxides and hydroxides of a coating element, oxyhydroxides of a coating element, oxycarbonates of a coating element, and hydroxycarbonates of a coating element. Compounds forming the above coating layer may be amorphous or crystalline. The coating element included in the coating layer may be Mg, Al, Co, K, Na, Ca, Si, Ti, V, Sn, Ge, Ga, B, As, Zr, or a mixture thereof. The method of forming a coating layer may be selected from methods that do not adversely affect the physical properties of the cathode active material. Examples of a coating method may include spray coating, dip coating, or a combination thereof. Specific coating methods are well known by those of ordinary skill in the art, and therefore detailed descriptions thereof will be omitted.

For example, the cathode active material may include, among the aforementioned lithium transition metal oxides, a lithium salt of a transition metal oxide that has a layered rock-salt type structure. The term "layered rock salt type structure" may be, for example, a structure in which oxygen atom layers and metal atom layers are alternatingly and regularly arranged in <111> direction of a cubic rock salt type structure, such that each atom layer forms a two-dimensional plane. The "cubic rock salt type" structure may represent a NaCl type structure, which is a type of lattice structure, and in particular, a structure in which the face centered cubic lattices (fcc) formed by cations and anions are positioned obliquely with respect to each other by 1/2 ridge of unit lattice. Examples of a lithium transition metal oxide having such a layered rock-salt type structure may be a ternary lithium transition metal oxide, such as $LiNi_xCo_yAl_zO_2$ (NCA) and $LiNi_xCo_yMn_zO_2$ (NCM) ($0 < x < 1$, $0 < y < 1$, $0 < z < 1$, and $x + y + z = 1$). When the cathode active material contains the ternary lithium transition metal oxide having the layered rock-salt type structure, further improvements in energy density and thermal stability of the solid-state secondary battery may be achieved.

The cathode active material may be covered by the coating layer as described above. The coating layer may be any suitable material known in the art as a coating layer for cathode active material in a solid-state secondary battery. The coating layer may be, for example, $Li_2O-ZrO_2$.

In addition, when the cathode active material contains nickel (Ni) as a ternary lithium transition metal oxide, such as NCA or NCM, reduction in elution of metal from the cathode active material in a charged state may be achieved by increasing the capacity density of the solid-state secondary battery. Thus, cycle characteristics of the solid-state secondary battery in the charged state may be improved.

Here, a shape of the cathode active material may be, for example, a particle shape such as a true spherical shape or an elliptical shape. In addition, the particle diameter of the cathode active material is not particularly limited and may be within a range that is applicable to a cathode active material in a conventional solid-state secondary battery in the art. The amount of the cathode active material in the cathode 10 is not particularly limited and may be within a range that is applicable to a cathode of a solid-state secondary battery in the art.

In addition to the above-described cathode active material, the cathode 10 may optionally further include an additive such as a conductive material, a binder, a filler, a dispersing agent, an ion conductivity aid, or a combination thereof. Examples of the conductive material may include graphite, carbon black, acetylene black, Ketjen black, carbon fibers, metal powder, or a combination thereof. Examples of the binder may include styrene butadiene rubber (SBR), polytetrafluoroethylene, polyvinylidene fluoride, polyethylene, or a combination thereof. For components such as a coating agent, a dispersing agent, and an ion conductivity aid that can be blended in the cathode 10, any suitable materials for use in an electrode of a solid-state secondary battery may be used.

The cathode 10 may optionally further include a solid electrolyte. The solid electrolyte included in the cathode layer 10 may be similar to or different from the solid electrolyte 30. Detailed description of the solid electrolyte may be found in the description of the solid electrolyte 30.

The solid-state electrolyte included in the cathode 10 may be, for example, a sulfide-based (e.g., sulfide) solid electrolyte. For the sulfide-based solid electrolyte, a sulfide-based solid electrolyte for use in the solid electrolyte 30 may be used.

Alternatively, the cathode 10 may be immersed in a liquid electrolyte, for example. The liquid electrolyte may include a lithium salt and at least one of an ionic liquid, or a polymer ionic liquid. The liquid electrolyte may be non-volatile. The ionic liquid may refer to a room-temperature molten salt or a salt in a liquid state at room temperature, which consists of ions alone and has a melting point of room temperature or less. The ionic liquid may comprise: a) at least one cation of ammonium, pyrrolidinium, pyridinium, pyrimidinium, imidazolium, piperidinium, pyrazolium, oxazolium, pyridazinium, phosphonium, sulfonium, triazolium, or a combination thereof; and b) at least one anion of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br$, $I^-$, $SO_4^-$, $CF_3SO_3^-$, $(FSO_2)_2N^-$, $(C_2F_5SO_2)_2N^-$, $(C_2F_5SO_2)(CF_3SO_2)N^-$, $(CF_3SO_2)_2N^-$, or a combination thereof. The ionic liquid may be, for example, N-methyl-N-propylpyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)imide, 1-ethyl-3-methylimidazolium bis(trifluoromethylsulfonyl)amide, or a combination thereof. The polymer ionic liquid may contain a repeating unit including: a) at least one cation of N-methyl-N-propylpyrrolidinium bis(trifluoromethanesulfonyl)imide, N-butyl-N-methylpyrrolidium bis(3-trifluoromethylsulfonyl)imide, 1-butyl- 3-methylimidazolium bis(trifluoromethylsulfonyl)amide, 1-ethyl-3-methylimidazolium bis(trifluoromethylsulfonyl)amide, or a mixture thereof; and b) at least one anion of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, $Cl^-$, $Br$, $I^-$, $SO_4^-$, $CF_3SO_3^-$, $(C_2F_5SO_2)_2N^-$, $(C_2F_5SO_2)(CF_3SO_2)N^-$, $NO_3^-$, $Al_2Cl_7^-$, $(CF_3SO_2)_3C^-$, $(CF_3)_2PF_4^-$, $(CF_3)_3PF_3^-$, $(CF_3)4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $CF_3SO_2)_2CH^-$, $(SF_5)_3C^-$, $(O(CF_3)_2C_2(CF_3)_2O)_2PO^-$, or a combination thereof. The lithium salt may be any suitable lithium salt available in the art. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO2)(C_yF_{2y+1}SO_2)$ (here, x and y each are a natural number), $LiCl$, $LiI$, or a mixture thereof. The concentration of the lithium salt contained in the liquid electrolyte may be about 0.1 molar (M) to about 5 M. The amount of the liquid electrolyte with which the cathode 10 is impregnated may be about 0 part by weight to about 100 parts by weight, about 0 part by weight to about 50 parts by weight, about 0 part by weight to about 30 parts by weight, about 0 part by weight to about 20 parts by weight, about 0 part by weight to about 10 parts by weight, or about 0 part by weight to about 5 parts by weight, with respect to 100 parts by weight of the cathode active material layer 12 not including the liquid electrolyte.

The solid electrolyte 30 of the solid-state secondary battery may be disposed between the cathode 10 and the anode 20.

The solid electrolyte may include an oxide-based (e.g., oxide) solid electrolyte, a sulfide-based solid electrolyte, or a combination thereof. The solid electrolyte may be, for example, an oxide-based solid electrolyte. The oxide-based solid electrolyte may be $Li_{1+x+y}Al_xTi_{2-x}Si_yP_{3-y}O_{12}$ (0<x<2 and 0≤y<3), $Li_3PO_4$, $Li_xTi_y(PO_4)_3$ (0<x<2 and 0<y<3), $Li_xAl_yTi_z(PO_4)_3$ (0<x<2, 0<y<1, and 0<z<3), $Li_{1+x+y}(Al_pGa_{1-p})_x(Ti_qGe_{1-q})_{2-x}Si_yP_{3-y}O_{12}$ (0≤x≤1, 0≤y≤1, 0≤p≤1 and 0≤q≤1), $Li_xLa_yTiO_3$ (0<x<2 and 0<y<3), $Li_2O$, $LiOH$, $Li_2CO_3$, $LiAlO_2$, $Li_2O-Al_2O_3-SiO_2-P_2O_5-TiO_2-GeO_2$, $Li_{3+x}La_3M_2O_{12}$ (M = Te, Nb, or Zr, and x is an integer of 1 to 10), or a combination thereof. The solid electrolyte may be prepared by a sintering method.

The oxide-based solid electrolyte may be, for example, a garnet-type solid electrolyte.

Non-limiting examples of the garnet-type solid electrolyte may include an oxide represented by Formula 1.

Formula 1 $\quad\quad (Li_xM1_y)(M2)_{3-\delta}(M3)_{2-\omega}O_{12-z}X_z$

In Formula 1, $3\leq x\leq 8$, $0\leq y<2$, $-0.2\leq\delta\leq 0.2$, $-0.2\leq\omega\leq 0.2$, and $0\leq z\leq 2$,

M1 may be a monovalent cation, a divalent cation, a trivalent cation, or a combination thereof,
M2 may be a monovalent anion, a bivalent anion, a trivalent anion, or a combination thereof,
M3 may be a monovalent anion, a bivalent anion, a trivalent anion, a tetravalent cation, a pentavalent cation, a hexavalent cation, or a combination thereof, and
X may be a monovalent anion, a divalent anion, a trivalent anion, or a combination thereof.

In Formula 1, examples of the monovalent cation may include Na, K, Rb, Cs, H, Fr, or a combination thereof, and examples of the divalent cation may include Mg, Ca, Ba, Sr, or a combination thereof. Examples of the trivalent cation may include In, Sc, Cr, Au, B, Al, Ga, or a combination thereof, and examples of the tetravalent cation may include Sn, Ti, Mn, Ir, Ru, Pd, Mo, Hf, Ge, V, Si, or a combination thereof. In addition, examples of the pentavalent cation may include Nb, Ta, Sb, V, P, or a combination thereof.

M1 may be hydrogen (H), iron (Fe), gallium (Ga), aluminum (Al), boron (B), beryllium (Be) or a combination thereof. M2 may be lanthanum (La), barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof. M3 may be zirconium (Zr), hafnium (Hf), tin (Sn), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof.

In Formula 1, the monovalent anion used as X may be a halogen atom, a pseudohalogen, or a combination thereof, the bivalent anion used as X may be $S^{2-}$ or $Se^{2-}$, and the trivalent anion used as X may be, for example, $N^{3-}$.

In Formula 1, $3\leq x\leq 8$, $3.3\leq x\leq 8$, $3.6\leq x\leq 8$, $6.7\leq x\leq 7.5$, or $6.8\leq x\leq 7.1$.

Non-limiting examples of the garnet-type solid electrolyte may include an oxide represented by Formula 2.

Formula 2 $\quad\quad (Li_xM1_y)(La_{a1}M2_{a2})_{3-\delta}(Zr_{b1}M3_{b2})_{2-\omega}O_{12-z}X_z$

In Formula 2, M1 may be hydrogen (H), iron (Fe), gallium (Ga), aluminum (Al), boron (B), beryllium (Be) or a combination thereof,

M2 may be barium (Ba), calcium (Ca), strontium (Sr), yttrium (Y), bismuth (Bi), praseodymium (Pr), neodymium (Nd), actinium (Ac), samarium (Sm), gadolinium (Gd) or a combination thereof,
M3 may be hafnium (Hf), tin (Sn), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al) or combinations thereof,

$$3\leq x\leq 8,\ 0\leq y<2,\ -0.2\leq\delta\leq 0.2,\ -0.2\leq\omega\leq 0.2,\ \text{and}\ 0\leq z\leq 2$$

$$a1+a2=1,\ 0<a1\leq 1,\ \text{and}\ 0\leq a2<1,$$

$$b1+b2=1,\ 0<b1<1,\ \text{and}\ 0\leq b2<1,$$

wherein X may be a monovalent anion, a bivalent anion, a trivalent anion, or a combination thereof.

In Formula 2, x may be $6\leq x\leq 8$.

In Formula 2, the monovalent anion used as X may be a halogen atom, a pseudohalogen, or a combination thereof, the bivalent anion used as X may be $S^{2-}$ or $Se^{2-}$, and the trivalent anion used as X may be, for example, $N^{3-}$.

In Formula 2, x may be $3\leq x\leq 8$, $6.6\leq x\leq 8$, $6.7\leq x\leq 7.5$, or $6.8\leq x\leq 7.1$.

As used herein, the term "pseudohalogen" refers to a molecule which comprises two or more electronegative atoms similar to halogens in a free state, and generates anions similar to halide ions. Examples of the pseudohalogen may include a cyanide, a cyanate, a thiocyanate, an azide, or a combination thereof.

Examples of the halogen atom may include iodine (I), chlorine (Cl), bromine (Br), fluorine (F), or a combination thereof. Examples of the pseudohalogen may include a cyanide, include a cyanide, a cyanate, a thiocyanate, an azide, or a combination thereof.

The trivalent anion may be, for example, $N^{3-}$.

In Formula 2, M3 may be Al, Ga, In, Si, Ge, Sn, Sb, Bi, Sc, Y, Ti, Hf, V, Nb, Ta, W, or a combination thereof.

According to another embodiment, the garnet-type solid electrolyte may be an oxide represented by Formula 3.

$$\text{Formula 3} \qquad Li_{3+x}La_3Zr_{2-a}M_aO_{12}$$

In Formula 3, M may be Al, Ga, In, Si, Ge, Sn, Sb, Bi, Sc, Y, Ti, Hf, V, Nb, Ta, W, or a combination thereof, wherein x is a number of 1 to 10, and $0 \le a < 2$.

Examples of the garnet-type solid electrolyte may include $Li_7La_3Zr_2O_{12}$, $Li_{6.5}La_3Zr_{1.5}Ta_{0.5}O_{12}$, or a combination thereof.

Alternatively, the solid electrolyte may be a sulfide-based solid electrolyte, for example. The sulfide-based solid electrolyte may be, for example, $Li_2S-P_2S_5$, $Li_2S-P_2S_5$-LiX, wherein X is a halogen element, or a combination thereof; $Li_2S-P_2S_5-Li_2O$, $Li_2S-P_2S_5-Li_2O$-LiI, $Li_2S-SiS_2$, $Li_2S-SiS_2$-LiI, $Li_2S-SiS_2$-LiBr, $Li_2S-SiS_2$-LiCl, $Li_2S-SiS_2-B_2S_3$-LiI, $Li_2S-SiS_2-P_2S_5$-LiI, $Li_2S-B_2S_3$, $Li_2S-P_2S_5-Z_mS_n$, wherein m and n each are a positive number, and Z is Ge, Zn or Ga, or a combination thereof; $Li_2S-GeS_2$, $Li_2S-SiS_2-Li_3PO_4$, $Li_2S-SiS_2-Li_pMO_q$, wherein p and q each are a positive number and M is P, Si, Ge, B, Al, Ga or In, or a combination thereof; $Li_{7-x}PS_{6-x}Cl_x$, wherein $0 \le x \le 2$; $Li_{7-x}PS_{6-x}Br_x$, wherein $0 \le x \le 2$; $Li_{7-x}PS_{6-x}I_x$, wherein $0 \le x \le 2$; or a combination thereof. The sulfide-based solid electrolyte may be prepared by treating starting materials, such as $Li_2S$ and $P_2S_5$, with a method such as melt-quenching, or mechanical milling. In addition, after such a treatment, a heat-treatment may be conducted. The sulfide-based solid electrolyte may be amorphous or crystalline, or may be in a mixed state thereof.

In particular, the sulfide-based solid electrolyte may be, among the sulfide-based solid electrolyte materials described herein, a material that contains at least sulfur (S), phosphorus (P), and lithium (Li), as its constitutive elements. For example, the sulfide-based solid electrolyte may be a material including $Li_2S-P_2S_5$. Here, when using a sulfide-based solid electrolyte material containing $Li_2S-P_2S_5$, a molar ratio of $Li_2S$ and $P_2S_5$ may be, for example, in a range of $Li_2S : P_2S_5$ = about 50:50 to about 90:10.

The sulfide-based solid electrolyte may be an argyrodite-type compound including $Li_{7-x}PS_{6-x}Cl_x$ wherein $0 \le x \le 2$, $Li_{7-x}PS_{6-x}Br_x$ wherein $0 \le x \le 2$, $Li_{7-x}PS_{6-x}I_x$ wherein $0 \le x \le 2$, or a combination thereof. In particular, the sulfide-based solid electrolyte included in the solid electrolyte may be an argyrodite-type compound including $Li_6PS_5Cl$, $Li_6PS_5Br$, LisPSsl, or a combination thereof.

A solid electrolyte 30 may further include a binder, for example. Examples of the binder included in the solid electrolyte 30 may include styrene butadiene rubber (SBR), polytetrafluoroethylene, polyvinylidene fluoride, polyethylene, or a combination thereof. However, the binder is not limited to the aforementioned materials and may be any suitable binder available in the art. The binder in the solid electrolyte 30 may be of the same type as, or a different type from, a binder included in the cathode active material layer 12 and the anode active material layer.

The anode for the solid-state secondary battery may contain an anode according to an embodiment.

A method of preparing the solid-state secondary battery 1 according to an embodiment may include preparing an anode 20; disposing the anode 20 on one side of a solid electrolyte 30; and disposing a cathode 10 on the other side of the solid electrolyte 30.

Hereinbelow, a method of preparing a solid-state secondary battery according to an embodiment will be described in greater detail.

The anode may be prepared including providing a three-dimensional porous current collector, which has a porosity of about 10% to about 99%, based on a total volume of the three-dimensional porous current collector, and includes a plurality of pores extended along a thickness direction, wherein pores of the plurality of the pores have a size and a pitch, and a ratio of the size to the pitch is about 0.1 to about 0.9; and disposing a first anode active material layer on a first side of the porous current collector.

The pores may be formed by various methods and for example, may be formed by using a laser drilling technique. The laser drilling technique may be used to form a lithiophilic coating layer within pores of a three-dimensional porous current collector.

Apart from the above, the process of preparing a cathode may be performed, and the process of disposing a solid electrolyte on the cathode may be performed. Subsequently, the process of disposing the above-described anode and the solid electrolyte having the cathode placed thereon may be performed to thereby prepare a solid-state secondary battery.

In an aspect, the method of preparing the solid-state secondary battery, the method may comprise: providing the three-dimensional porous current collector, which has the porosity of about 10 percent to about 99 percent, based on the total volume of the three-dimensional porous current collector, and comprises the plurality of pores extending along the thickness direction, wherein the pores of the plurality of the pores have the size, and the pitch, and the ratio of the size to the pitch is about 0.1 to about 0.9; disposing the first anode active material layer on the first side of the three-dimensional porous current collector to prepare the anode; providing the cathode; disposing the solid electrolyte on the cathode; and disposing the anode on the solid electrolyte opposite the cathode wherein the first anode active material layer faces the solid electrolyte, to prepare the solid-state secondary battery.

According to an embodiment, through the process of disposing the first anode active material layer on the three-dimensional porous current collector, the solid-state secondary battery may be prepared.

According to another embodiment, a solid-state secondary battery may be prepared through a process of disposing a first portion of the first anode active material layer on the three-dimensional porous current collector, disposing a second portion of the first anode active material layer on the solid electrolyte, and then bonding the resulting structure.

The first anode active material layer disposed on the three-dimensional porous current collector may be formed to a first thickness, and the first anode active material layer disposed on the solid electrolyte may be formed to a second thickness. Here, the first thickness may be greater than the second thickness.

The second thickness of the second portion of the first anode active material layer disposed on the solid electrolyte may be less than 5%, for example, 1 % to 4.5% of the first thickness of the first portion of the first anode active material layer disposed on the three-dimensional porous current collector. Accordingly, if the process of assembly by disposing the second portion of the first anode active material layer on the solid electrolyte is performed, the solid-state secondary battery may be prepared even without performing a press process such as warm isotactic pressing (WIP), or cold isotactic pressing (CIP).

During the process of preparing the solid-state secondary battery, an interlayer may be further disposed between the first anode active material layer and the solid electrolyte.

A process of disposing, for example, bonding, the first anode active material layer on the interlayer by pressing or compression may be included. During the compression process, some of lithium in the first anode active material layer may be inserted into the interlayer.

A pressure applied during the press or compression may be about 150 megaPascals MPa or greater, for example. The pressure applied during the pressing may be about 250 MPa or greater, for example. For example, the pressure applied during the press or compression may be about 150 MPa to about 10,000 MPa, about 300 MPa to about 5,000 MPa, or about 500 MPa to about 2,000 MPa.

The duration for which the pressure is applied may be for about 10 minutes or less. For example, the duration for which the pressure is applied may be about 5 milliseconds (ms) to about 10 minutes (min). For example, the duration for which the pressure is applied may be about 2 minutes to about 7 minutes.

The pressing may be conducted at room temperature (25 °C). For example, the press may be conducted at about 15 °C to about 25 °C. However, the temperature at which the pressure is applied is not necessarily limited to the aforementioned temperature, and may be a temperature of about 25 °C to about 90 °C, or at a high temperature of 100 °C or greater, for example, about 100 °C to about 500 °C.

The pressing may be conducted by techniques such as roll press, uni-axial pressing, flat press, warm isotactic pressing (WIP), or cold isotactic pressing (CIP). However, the pressing is not necessarily limited to the aforementioned techniques and may be any suitable pressing method available in the art.

The second anode active material layer may be a lithium precipitation layer that induces precipitation of lithium metal on the three-dimensional porous current collector to thereby prevent the solid electrolyte and the lithium metal from being in direct contact with each other.

The second anode active material layer may be the lithium metal or a second metal coated on the three-dimensional porous current collector. Alternatively, the second anode active material layer may be the lithium metal or a lithium alloy layer precipitated during charging. Due to lithium precipitation during charging, the second anode active material layer may increase in its volume and thickness. In particular, the second metal may form an Li-M3 alloy via a reversible reaction during the charging and discharging process of the solid-state secondary battery. During the charging process or disposition process of the solid-state secondary battery, or during both of the aforementioned processes, the second anode active material layer may be formed as a precipitation layer or a deposition layer, and the second anode active material layer may be a lithium metal layer or a lithium metal alloy layer.

During the charging process or disposition process of the solid-state secondary battery, or during both of the aforementioned processes, the second metal in the second anode active material layer may form an alloy with lithium.

The method of preparing the solid-state secondary battery may include disposing and pressing the three-dimensional porous current collector onto the first anode active material layer, the interlayer, and the solid electrolyte. During the pressing process, some of lithium present in the second anode active material layer may be inserted into the first anode active material layer and/or interlayer.

The disposition (e.g., bonding) may be a press compaction process. During the press process, some of lithium present in the second anode active material layer may be inserted into the first anode active material layer and/or interlayer. Accordingly, the first anode active material layer may include a carbonaceous active material and lithium, and the interlayer may include a composite including a lithium ion conductor and a lithium-M1 alloy.

The process by which the cathode is prepared may be as follows.

Materials forming the cathode active material layer, such as a cathode active material and a binder, were added to a nonpolar solvent to produce a slurry. The produced slurry was coated on a cathode current collector and the coated cathode current collector was dried. The laminate obtained therefrom was pressed to produce the cathode 10. The press may be conducted using methods such as a roll press, a flat press, and a hydrostatic pressure, but is not necessarily limited to the aforementioned methods and may be any suitable press available in the art. The press process may be omitted. A mixture of materials forming the cathode active material layer may be compacted in a pellet form, or may be stretched (molded) into a sheet form to thereby produce the cathode 10. When the cathode 10 is prepared as described above, the cathode current collector may be omitted. Alternatively, the cathode 10, before use, may be impregnated with an electrolyte solution.

The process by which the solid electrolyte is prepared may be as follows.

A solid electrolyte 30 including an oxide-based solid electrolyte may be prepared, for example, by heat-treating a precursor of an oxide-based solid electrolyte material.

The oxide-based solid electrolyte may be prepared by contacting precursors with one another in a stoichiometric amount to form a mixture, and heat-treating the mixture. The contacting may be conducted by, for example, grinding or milling such as ball milling. The mixture of precursors mixed in a stoichiometric composition may undergo a first heat-treatment in an oxidizing atmosphere, to produce a product of the first heat-treatment. The first heat-treatment may be conducted at a temperature of about 1,000 °C or less, for about 1 hour to about 36 hours. The product of the first heat-treatment may be pulverized. The pulverization of the product of the first heat-treatment may be performed in a dry or wet manner. The wet pulverization may be conducted, for example, by mixing the product of the first heat-treatment with a solvent such as methanol, and then milling the resulting mixture by a ball mill, for about 0.5 hours to about 10 hours. The dry pulverization may be conducted by milling, using a ball mill, without solvent. The pulverized product of the first heat-treatment may have a particle diameter of about 0.1 $\mu$m to about 10 $\mu$m, or about 0.1 $\mu$m to about 5 $\mu$m. The pulverized product of the first heat-treatment may be dried. The pulverized product of the first heat-treatment may be mixed with a binder solution and molded into a pellet form, or may be simply pressed by a pressure of about 1 ton to about 10 tons and molded into a pellet form.

The molded product may undergo a second heat-treatment at a temperature of less than about 1,000 °C, for about 1 hour to about 36 hours. A solid electrolyte 30, which is a sintered product from the second heat-treatment, may be obtained. The second heat-treatment may be conducted at a temperature of about 550 °C to about 1,000 °C, for example. The duration of the first heat-treatment may be 1 hour to about 36 hours. To produce a sintered product, the temperature of the second heat-treatment may be greater than the temperature of the first heat-treatment. For example, the temperature of the second heat-treatment may be greater than the temperature of the first heat-treatment, by 10 °C or greater, 20 °C or greater, 30 °C or greater, or 50 °C greater. The molded product may undergo the second heat-treatment in an oxidizing atmosphere, a reducing atmosphere, or a combination thereof. Thus, the second heat-treatment may be conducted in a) an oxidizing atmosphere, b) a reducing atmosphere, or c) an oxidizing atmosphere and a reducing atmosphere.

The solid electrolyte 30 including a sulfide-based solid electrolyte may be prepared by using, for example, a solid electrolyte made of a sulfide-based solid electrolyte material.

For the sulfide-based solid electrolyte material, starting materials thereof may be treated by a quenching method, or a mechanical milling method, but is not limited to the aforementioned methods and may be any suitable method available in the art for preparing a sulfide-based solid electrolyte. For example, when the quenching method is used, a starting material such as $Li_2S$, or $P_2S_5$, may be mixed and formed into a pellet and then treated at a predetermined reaction temperature in a vacuum state, and quenched to thereby form the sulfide-based solid electrolyte material. In addition, the reaction temperature of a mixture of $Li_2S$ and $P_2S_5$, for example, may be about 400 °C to about 1,000 °C, or about 800 °C to about 900 °C. The reaction time may be about, for example, about 0.1 hour to about 12 hours, or about 1 hour to about 12 hours. The quenching temperature of the reactants may be 10 °C or less or 0 °C or less, and the quenching rate thereof may be about 1 °C/second (sec) to about 10,000 °C/sec, or about 1 °C/sec to about 1,000 °C/sec. For example, when a mechanical milling method is used, the preparation of the sulfide-based solid electrolyte material may be achieved by reacting starting materials such as $Li_2S$, or $P_2S_5$, by a ball mill. The stirring speed and stirring time of the mechanical milling method are not particularly limited. In particular, as the stirring speed increases, the formation speed of the sulfide-based solid electrolyte material increases, and as the stirring time increases, the conversion rate of raw materials to the sulfide-based solid electrolyte material increases. Subsequently, mixed materials obtained by a melt quenching method, or a mechanical milling method, may be heat-treated at a predetermined temperature and then pulverized to thereby prepare a solid electrolyte in a particle form. If the solid electrolyte has glass transition characteristics, the solid electrolyte can be transformed from an amorphous phase to a crystalline phase by a heat treatment.

The solid electrolyte obtained by such a method may be deposited by a known film-forming method, for example, an aerosol deposition method, a cold spray method, or a sputtering method, to thereby prepare the solid electrolyte 30. Alternatively, the solid electrolyte 30 may be prepared by pressing a group of solid electrolyte particles. Alternatively, the solid electrolyte 30 may be prepared by mixing a solid electrolyte, a solvent, and a binder, and coating, drying and pressing the resulting mixture.

According to another embodiment, the cathode 10 of the solid-state secondary battery 1 may contain a liquid electrolyte.

The composition and preparation method of the solid-state secondary battery described above are merely examples, and as such, appropriate modifications in its constitutive elements and preparation process may be possible. The pressing may be omitted.

The present inventive concept will be described in greater detail through the following examples and comparative examples. However, it will be understood that the examples are provided only to illustrate the present inventive concept and not to be construed as limiting the scope of the present inventive concept.

EXAMPLES

Preparation of Solid-State Secondary Battery

Example 1: NCA(4.4mAh/cm2)/LLZO/GeTe/Carbon/LDCu(laser drilled Cu)

LLZO ($Li_7La_3Zr_2O_{12}$) pellet having a thickness of 500 $\mu$m was prepared as a solid electrolyte.

A GeTe alloy layer as a metal alloy layer was formed on top of the LLZO pellet to a thickness of about 20 nm via radio frequency (RF) sputtering using GeTe target. As a result, an LLZO solid electrolyte layer/pre-interlayer structure was prepared by disposing the metal alloy layer as the pre-interlayer on top of the solid electrolyte. In the GeTe alloy layer, the atomic ratio (molar ratio) of Ge to Te was 2:1. For sputtering the GeTe alloy layer, the process conditions included a power of 200 watt (W) and a sputtering duration of 1,800 seconds (sec), and used $N_2$ (8 millitorr, mTorr) as plasma gas.

The LLZO solid electrolyte layer/pre-interlayer structure was heat-treated in an argon atmosphere to about 200 °C, and then annealed at 200 °C for 30 minutes to thereby form an LLZO solid electrolyte layer/interlayer (thickness: 20 nm) structure. The interlayer contained $Li_1Ge_{0.79}Te_{0.53}O_{1.81}$.

Apart from the above, a copper oxide layer was formed on a porous copper foam (porosity: 77%) by oxidizing pore surfaces via a laser drilling process, to thereby prepare a three-dimensional porous current collector including a uniform pattern of pore size and pitch having a lithiophilic property. Here, the term "pore size" denotes "pore diameter".

An anode structure including a three-dimensional porous current collector/first anode active material layer (AgC layer)(thickness: about 7 $\mu$m) was prepared by coating a first anode active material layer slurry on top of the three-dimensional porous current collector and drying the same at room temperature (25 °C) for 1 hour. The first anode active material layer was formed on top of the three-dimensional porous anode current collector, and was formed in at least a portion of the pores of the three-dimensional porous current collector.

The first anode active material layer slurry was prepared following the process below.

3 grams (g) of carbon black (CB) as anode active material was introduced into a container and 2.692g of a polyvinyl alcohol-polyacrylic acid (PVA-PAA) binder solution (SUMITOMO SEIKA CHEMICALS CO., LTD, AG binder) mixed in 7 g of distilled water was introduced into the container, and the resulting mixture was subjected to a first stirring at 1,000 rotations per minute (rpm) for 30 minutes to thereby form a first slurry. To the first slurry, zirconia balls (4g) and 20 g of distilled water were introduced, and the resulting mixture was subjected to second stirring at 1,000 rpm for 30 minutes, to thereby prepare a second slurry. To the second slurry, 20 g of distilled water was introduced, and the resulting mixture was subjected to a second stirring at 1,000 rpm for 30 minutes, to thereby prepare a third slurry.

The anode structure was deposited on top of the interlayer of the interlayer (metal alloy layer)/LLZO membrane structure such that the first anode active material layer (AgC layer) of the anode structure was facing the interlayer. The laminate of solid electrolyte layer/first anode active material layer/interlayer/three-dimensional porous current collector was prepared by applying 250 MPa to the laminate at 25 °C by cold isotactic pressing (CIP).

As a cathode active material, $LiNi_{0.8}Co_{0.15}Al_{0.05}O_2$ (NCA) was prepared. Also, polytetrafluoroethylene (manufactured by Du Pont, TEFLON® binder) was prepared as a binder. In addition, carbon nanofibers (CNF) were prepared as a conductive aid. Then, the aforementioned materials were mixed in a weight ratio of cathode active material: conductive aid : binder = 100 : 2 : 1. The mixture was elongated into a sheet form to prepare a cathode active material sheet. Then, this cathode active material sheet was compressed on a cathode current collector made of an aluminum foil having a thickness of 18 $\mu$m to thereby prepare a cathode layer.

The cathode active material layer of the cathode thus prepared was immersed in an electrolyte solution containing 2.0 M of lithium bis(trifluoromethanesulfonyl)imide (LiFSI) dissolved in ionic fluid PYR13FSI (N-propyl-N-methyl-pyrrolidinium bis(fluorosulfonyl)imide).

The cathode was placed in a stainless steel (SUS) cap such that the cathode active material layer immersed in the electrolyte solution was facing upward. The solid electrolyte layer/first anode active material layer/interlayer/three-dimensional porous current collector laminate was arranged such that the solid electrolyte was arranged on the cathode active material layer, and then sealed to thereby prepare a solid-state secondary battery. The cathode and anode were insulated by an insulating material. Parts of the cathode current collector and anode current collector were taken out of the sealed battery and used as a cathode layer terminal and an anode layer terminal.

Examples 2-4

A solid-state secondary battery was prepared following the same process as Example 1, except the three-dimensional porous current collectors shown in Table 1 below were respectively used as the three-dimensional porous current collector.

Comparative Examples 1-2

A solid-state secondary battery was prepared following the same process as Example 1, except the three-dimensional porous current collector shown in Table 1 below was used as the three-dimensional porous current collector. In Table 1, the term "pore size" denotes an average diameter of pore.

Table 1

| Item | Pore average diameter (D) ($\mu$m) | Pore pitch (P) ($\mu$m) | D/P | Porosity (%) | Thickness of current collector ($\mu$m) | Current collector (Cu) |
|---|---|---|---|---|---|---|
| Example 1 | 25 | 100 | 0.25 | 90 | 80 | Laser drilled foam |
| Example 2 | 9 | 22 | 0.41 | 49 | 18 | Laser drilled foil |
| Example 3 | 15 | 43 | 0.35 | 27 | 18 | |
| Example 4 | 15 | 60 | 0.25 | 13 | 18 | |
| Comparative Example 1 | - | - | NA | NA | 18 | Foil |
| Comparative Example 2 | 30 | 350 | 0.09 | 4.5 | 18 | Laser drilled foil |

The volume of the copper foil used in Examples 2 to 4 and Comparative Examples 1-2 in Table 1 was $2.04 \times 10^{-3}$ cc.

Evaluation Example 1: Charging-Discharging Characteristics I (Cell Thickness Change)

Charge/discharge characteristics of the solid-state secondary batteries prepared in Examples 1-4, and Comparative Examples 1-2 were evaluated by the following charge/discharge test. The charge/discharge testing was conducted by placing the solid-state secondary batteries in a constant-temperature chamber at 25 °C.

During the first cycle, the battery was charged at a constant current of 0.5 milliampere per square centimeter ($mA/cm^2$) until the battery voltage reached 4.4 V. Subsequently, the battery was discharged at a constant current of 0.5 $mA/cm^2$ until the battery voltage reached 2.85 V.

During the second cycle, the battery was charged at a constant current of 1.0 $mA/cm^2$ until the battery voltage reached 4.4 V. Subsequently, the battery was discharged at a constant current of 1.0 $mA/cm^2$ until the battery voltage reached 2.85 V.

During the third cycle, the battery was charged at a constant current of 2.0 $mA/cm^2$ until the battery voltage reached 4.4 V. Subsequently, the battery was discharged at a constant current of 2.0 $mA/cm^2$ until the battery voltage reached 2.85 V.

During the fourth cycle, the battery was charged at a constant current of 3.0 $mA/cm^2$ until the battery voltage reached 4.4 V. Subsequently, the battery was discharged at a constant current of 3.0 $mA/cm^2$ until the battery voltage reached 2.85 V.

During the fifth to fourteenth cycles, the battery was charged at a constant current of 0.5 $mA/cm^2$ until the

battery voltage reached 4.4 V. Subsequently, the battery was discharged at a constant current of 0.5 mA/cm$^2$ until the battery voltage reached 2.85 V.

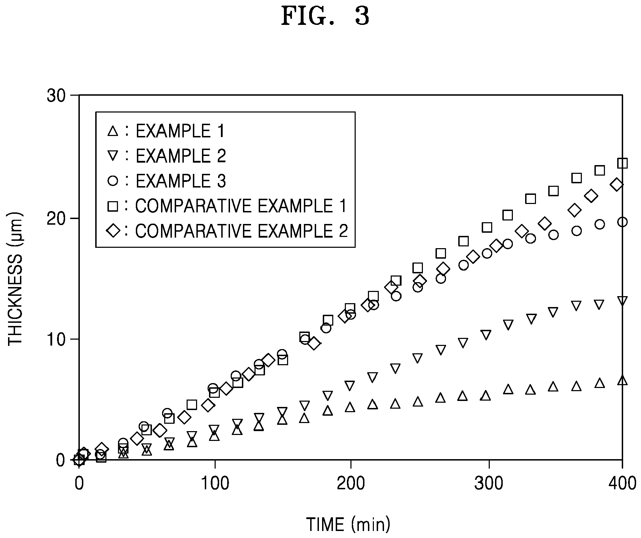

A portion of the charging/discharging results is shown in Table 2 and FIG. 3.

Table 2

| Item | $\triangle$ Cell thickness change ($\mu$m) |
|---|---|
| Example 1 | 5.0 |
| Example 2 | 12 |
| Example 3 | 19 |
| Example 4 | 20 |
| Comparative Example 1 | 25 |
| Comparative Example 2 | 24 |

As shown in Table 2 and FIG. 3, while the copper foil of Comparative Example 1 had a thickness change of 25 %, and the current collector of Comparative Example 2 had a thickness change of 24 %, the solid-state secondary batteries of Examples 1 to 3 showed that the cell thickness change decreased to less than 25 % over time. In particular, the three-dimensional porous current collector of Example 2 had a structure with densely formed pores due to having a smaller pore diameter and pore pitch, compared to Example 4, and it was found that using such a porous current collector further reduced the cell thickness change.

Evaluation Example 2: Charge-Discharge Characteristics II

Charge/discharge characteristics of the solid-state secondary battery prepared in Example 2 were evaluated by the following charge-discharge test. To confirm the operating characteristics of a solid-state secondary battery in a high-current density state, the charge/discharge test was performed through charging/discharging while varying a current density at 25 °C.

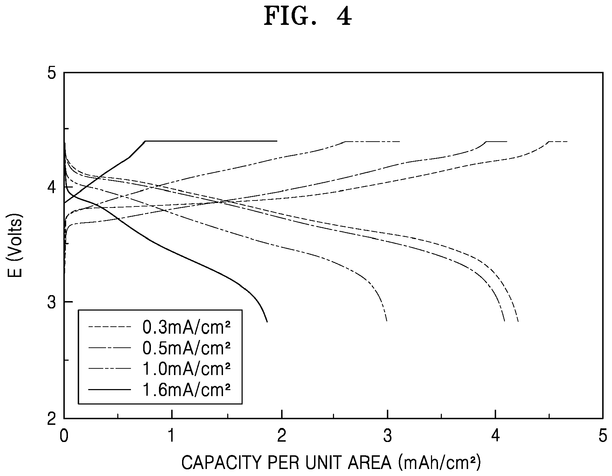

A portion of the charging/discharging results is shown in FIG. 4.

As shown in FIG. 4, the solid-state secondary battery of Example 2 was found to be stably operating at 0.3 mA/cm$^2$, 0.5 mA/cm$^2$, 1.0 mA/cm$^2$, and 1.6 mA/cm$^2$ without short-circuiting. In addition, the solid-state secondary battery of Example 2 was able to achieve a capacity of 4.1 mAh/cm$^2$ at 0.5 mA/cm$^2$ at room temperature.

Evaluation Example 3: High-temperature Charging/Discharging Test II

Charge/discharge characteristics of the solid-state secondary battery prepared in Example 2 were evaluated by the following charge-discharge test. The charge/discharge testing was conducted by placing the solid-state secondary batteries in a constant-temperature chamber at 60 °C.

During the first cycle, the battery was charged at a constant current of 0.5 mA/cm$^2$ until the battery voltage reached 4.4 V. Subsequently, the battery was discharged at a constant current of 0.5 mA/cm$^2$ until the battery voltage reached 2.85 V.

During the second cycle, the battery was charged at a constant current of 1.0 mA/cm$^2$ until the battery voltage reached 4.4 V. Subsequently, the battery was discharged at a constant current of 1.0 mA/cm$^2$ until the battery voltage reached 2.85 V.

During the third to two hundredth cycles, the battery was charged at a constant current of 1.6 mA/cm$^2$ until the battery voltage reached 4.4 V. Subsequently, the battery was discharged at a constant current of 1.6 mA/cm$^2$ until the battery voltage reached 2.85 V.

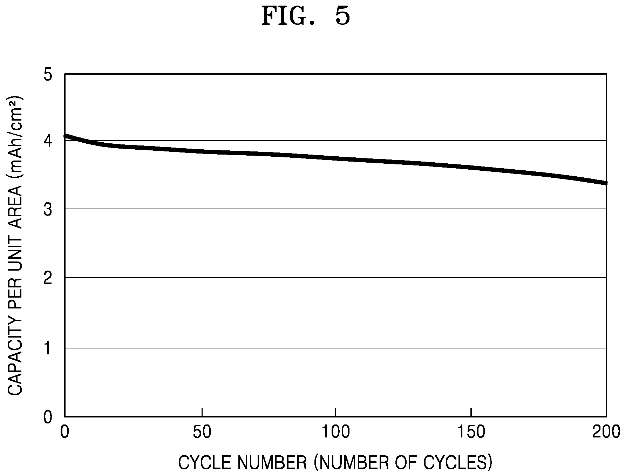

A portion of the charging/discharging results is shown in FIG. 5.

As shown in FIG. 5, it could be confirmed that the solid-state secondary battery of Example 2 was able to charge and discharge up to 200 cycles without short-circuits and had excellent capacity retention at a current density of 1.6mA/cm$^2$.

Evaluation Example 4: X-ray photoelectron spectroscopy (XPS)

The three-dimensional porous current collector of the solid-state secondary battery of Example 1 was evaluated by photoelectron spectroscopy using the Quantera XPS system with a spot beam size of 15 $\mu$m and a resolution of 0.1 electronvolts (eV).

Through this analysis, the results of XPS analysis regarding C1s, Cu2p, and O1s on the three-dimensional porous current collector used in Example 1 and a porous anode current collector prior to laser drilling were investigated.

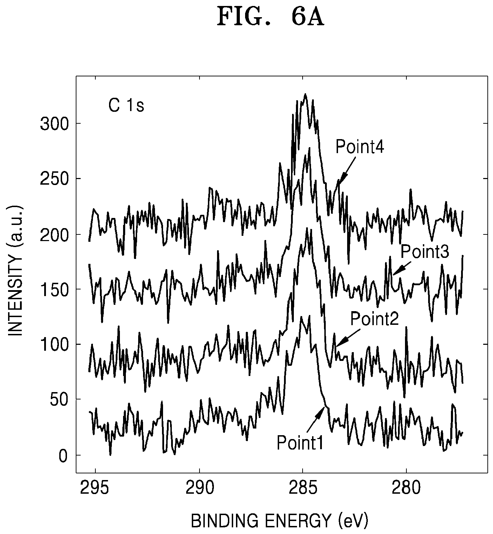

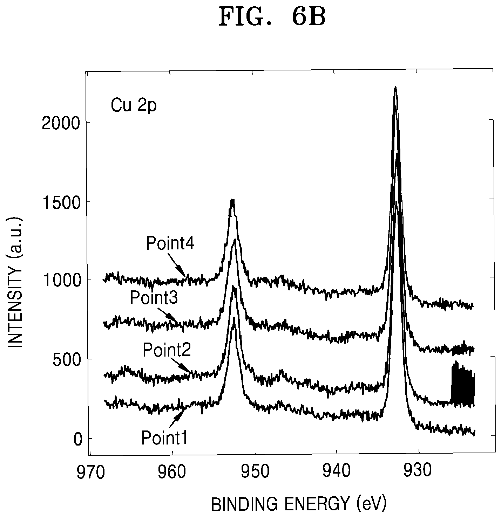

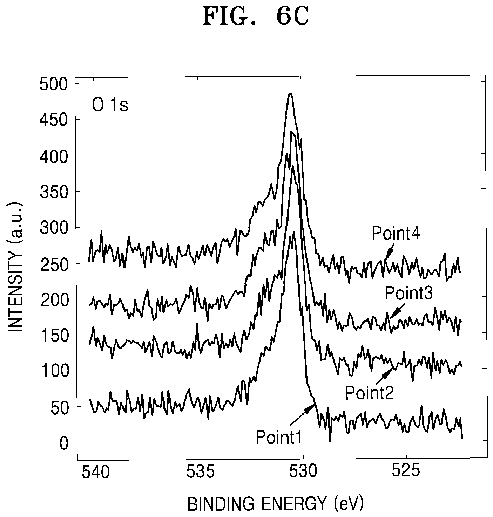

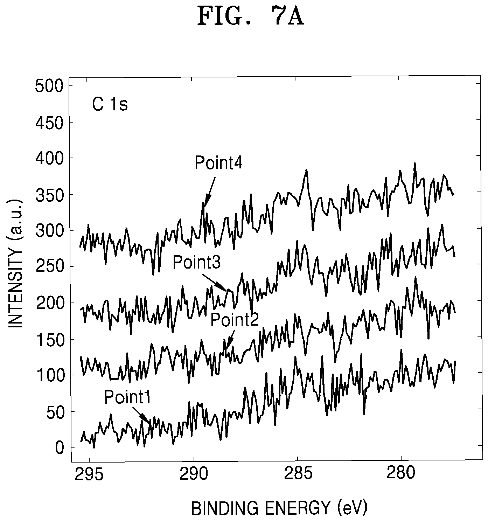

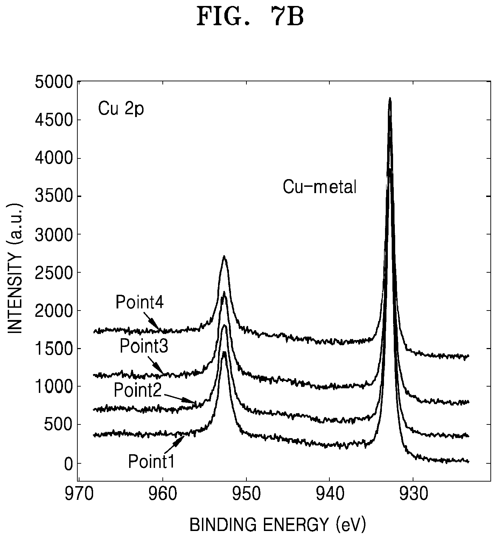

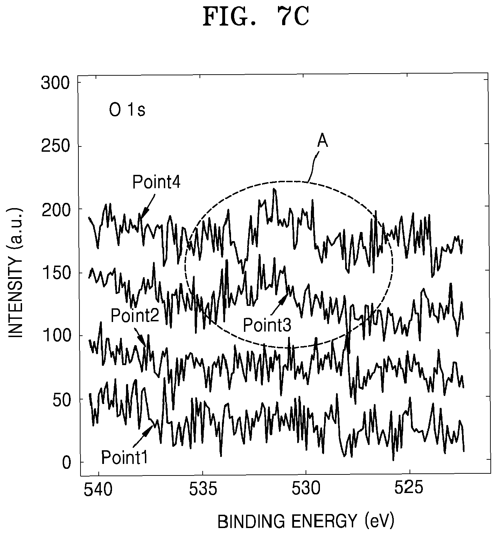

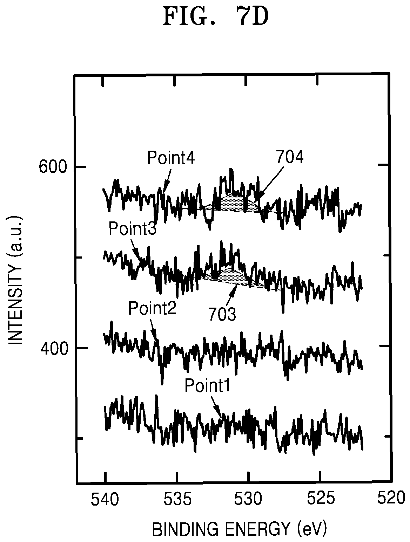

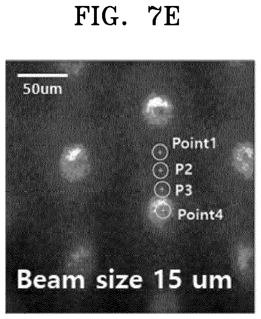

FIG. 6A to FIG. 6C show the results of XPS analysis after sputtering with argon at 1 kV for 1 min on an anode current collector part of a disassembled cell of the solid-state secondary battery of Example 1 completed with charging/discharging evaluation. In addition, FIG. 7A to FIG. 7C show the results of XPS analysis after sputtering with argon at 2 kV for 10 min on an anode current collector part of a disassembled cell of the solid-state secondary battery of Example 1 completed with charging/discharging evaluation. Further, FIG. 7D is a magnified view of an indicated region A of FIG. 7C. The locations of Points 1 to 4 in FIGS. 6A, 6B, and 6C, and FIGS. 7A, 7B, and 7C are shown in FIG. 7E. Point 4 (P4) represents a laser-drilled pore, and Point 3 (P3), Point 2 (P2), Point 1 (P1), in this order, represent positions further away from Point 4. Here, Point 1 and Point 2 represent areas related to a native oxide layer, Point 4 represents a laser-drilled area, and Point 3 represents an area adjacent to the laser-drilled area.

As shown in FIG. 7C and FIG. 7D, even after 2 kV 10 min. sputtering, a minute amount of oxygen peaks were observed near the pores of Point 4 and Point 3. Further, as shown in FIG. 7D, it could be confirmed that unlike Point 1 and Point 2, the areas indicated by triangles 703 and 704 were present in Point 4 and Point 3.

Meanwhile as shown in FIG. 6C, considering that the native oxide layer formed on the Cu surface by contact with air disappears within 1 kV and 1 min sputtering, it could be confirmed that a copper oxide (CuO) layer formed with a thickness of 10 nm or more by oxidation via laser drilling was formed on the surface of the pores. From this result, it could be confirmed by XPS analysis that the pores of the three-dimensional porous current collector have a lithiophilic property.

Evaluation Example 5: Optical Microscope

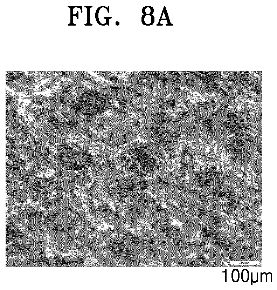

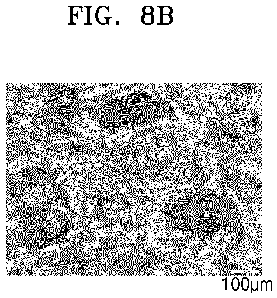

The solid-state secondary battery prepared in Example 1 was completely charged at 0.2 C. The C rate is a discharge rate of a cell, and is obtained by dividing a total capacity of the cell by a total discharge period of time of 1 hour, e.g., a C rate for a battery having a discharge capacity of 1.6 ampere-hours would be 1.6 amperes. The total capacity is determined by a discharge capacity on the 1st cycle. 0.1 C or C/10 refers to a current that will fully discharge the battery in 10 hours. Subsequently, the test cell was dissembled, and a surface of the laser-drilled Cu foam current collector thereof was examined by an optical microscope. The results of optical microscopic analysis are shown in FIG. 8A and FIG. 8B. FIG. 8A is an optical microscopic image magnified two times of the surface of the laser-drilled Cu foam current collector prior to charging in a solid-state secondary battery of Example 1.

FIG. 8B is an optical microscopic image magnified two times of a surface of a laser-drilled Cu foam current collector of a test cell dissembled after complete charging at 0.2 C of the solid-state secondary battery in FIG. 8A.

As Li deposition shown in grey was observed in pores, which was the three-dimensional porous current collector of Example 1, it could be confirmed that lithium was deposited in the pores of the three-dimensional porous current collector via the first anode active material layer. This result indicates that lithium deposition space could be ensured within the three-dimensional porous current collector.

Although one or more embodiments have been described with reference to the drawings and examples, these embodiments are merely exemplary, and those skilled in the art shall understand that various modifications and equivalent other embodiments are possible therefrom. Accordingly, the scope of the present application shall be defined by the appended claims.

According to an embodiment, an anode for a solid-state secondary battery contains a three-dimensional porous current collector having a lithiophilic property and thus may further ensure lithium deposition space. By using such an anode, a solid-state secondary battery that has improved lifetime characteristics by having minimized cell thickness changes after charging/discharging may be prepared.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1. An anode for a solid-state secondary battery, the anode comprising:

   a three-dimensional porous current collector comprising a plurality of pores having a lithiophilic property, and having a porosity of 10 percent to 99 percent, based on a total volume of the three-dimensional porous current collector,
wherein pores of the plurality of the pores have a size and a pitch, and a ratio of the size to the pitch is 0.1 to 0.9; and a first anode active material layer disposed on a first side of the three-dimensional porous current collector, wherein the first anode active material layer is disposed in at least a portion of the pores of the three-dimensional porous current collector.

2. The anode of claim 1, wherein the size of the pores of the three-dimensional porous current collector is 0.1 micrometer to 100 micrometers.

3. The anode of claims 1 or 2, wherein the pitch between the pores of the three-dimensional porous current collector is 0.1 micrometer to 100 micrometers.

4. The anode of any of claims 1-3, wherein the ratio of the size to the pitch of the pores of the three-dimensional porous current collector is 0.2 to 0.5; and/or
wherein a horizontal cross-section of the pore has a circular shape, an oval shape, a triangular shape, a square shape, a rectangular shape, a hexagonal shape, or a combination thereof.

5. The anode of any of claims 1-4,

further comprising a lithiophilic coating layer on a surface of the plurality of the pores of the three-dimensional porous current collector,
wherein the lithiophilic coating layer is an oxide layer comprising copper, nickel, aluminum, stainless steel, titanium, iron, cobalt, or a combination thereof.

6. The anode of any of claims 1-5, wherein the three-dimensional porous current collector has an oxygen peak at a binding energy of 525 electronvolts to 535 electronvolts, when analyzed by X-ray photoelectron spectroscopy, after sputtering on the three-dimensional porous current collector at 1.1 kilovolts or greater.

7. The anode of any of claims 1-6, wherein the three-dimensional porous anode current collector comprises copper, nickel, aluminum, stainless steel, titanium, iron, cobalt, or a combination thereof; and/or
wherein the three-dimensional porous anode current collector is in a form of a foil, a foam, or a mesh.

8. The anode of any of claims 1-7, wherein the first anode active material layer comprises:

a carbonaceous anode active material;
a mixture of a carbonaceous anode active material and a first metal, a metalloid, or a combination thereof;
a composite of a carbonaceous anode active material and the first metal, the metalloid, or a combination thereof; or
a combination thereof;
preferably wherein
the carbonaceous anode active material comprises amorphous carbon, and
the first metal or the metalloid comprises indium, silicon, gallium, tin, aluminum, titanium, zirconium, niobium, germanium, antimony, bismuth, gold, platinum, palladium, magnesium, silver, zinc, nickel, iron, cobalt, chromium, cesium, cerium, sodium, potassium, calcium, yttrium, bismuth, tantalum, hafnium, barium, vanadium, strontium, lanthanum, or a combination thereof.

9. The anode of any of claims 1-8, further comprising an interlayer on a first side of the first anode active material layer opposite to a second side of the first anode active material layer on which the three-dimensional porous current collector is disposed,

wherein the interlayer comprises a metal or a metal alloy, which is capable of forming an alloy or a compound with lithium;
preferably wherein the metal alloy comprises a third element and a fourth element, and is represented by the formula M3M4,
wherein in a solution of pH 7 or less, the third element is soluble as an ion and the fourth element is insoluble,
wherein the third element is Li, Na, K, Rb, Cs, Mg, Ca, Sr, Ba, Sc, V, Cr, Mn, Fe, Co, Ni, Cu, Zn, Ga, Al, Ge, Y, Zr, Hf, Nb, Tc, Rh, Cd, In, B, Si, P, F, Cl, Br, I, S, As, Sb, Bi, Ta, Re, Hg, Tl, Pb, or a combination thereof, optionally in combination with C, N, or a combination thereof, and

the fourth element is Ti, Mo, Ru, Pd, Ag, Sn, Se, Te, W, Os, Ir, Pt, Au, or a combination thereof.

10. The anode of claim 9, wherein the interlayer comprises a $Ge_xTe_y$ alloy wherein $0<x\leq3$ and $0<y\leq2$, a $Sb_xTe_y$ alloy wherein $0<x<1$ and $0<y<1$, a $Ge_xSe_y$ alloy wherein $0<x\leq1$ and $0<y\leq1$, a $Te_xGa_y$ alloy wherein $0<x\leq3$ and $0<y\leq2$, $Te_xZn_y$ wherein $0<x\leq1$ and $0<y\leq2$, $Te_xBi_y$ wherein $0<x\leq3$ and $0<y\leq2$, $Te_xSb_y$ wherein $0<x\leq3$ and $0<y\leq2$, $Te_xBi_y$ wherein $0<x\leq6$ and $0<y\leq14$, $Te_xAu_y$ wherein $0<x\leq2$ and $0<y\leq1$, $Te_3As_4$ wherein $0<x\leq3$ and $0<y\leq4$, $Te_3As_2$ wherein $0<x\leq3$ and $0<y\leq2$, $Te_xSn_y$ wherein $0<x\leq1$ and $0<y\leq1$, $Te_xSr_y$ wherein $0<x\leq1$ and $0<y\leq1$, $Te_xY_y$ wherein $0<x\leq3$ and $0<y\leq2$, $Te_xZr_y$ wherein $0<x\leq5$ and $0<y\leq1$, $Te_xNb_y$ wherein $0<x\leq2$ and $0<y\leq1$, $Te_xMo_y$ wherein $0<x\leq2$ and $0<y\leq1$, $Te_xAg_y$ wherein $0<x\leq1$ and $0<y\leq2$, $Te_xIn_y$ wherein $0<x\leq3$ and $0<y\leq2$, $Te_xSn_y$ wherein $0<x\leq1$ and $0<y\leq1$, $Te_xPd_y$ wherein $0<x\leq2$ and $0<y\leq1$, $Bi_x$-$Sb_y$-$Te_z$ wherein $0<x\leq4$, $0<y\leq4$, and $0<z\leq4$, $Bi_x$-$Se_y$-$Te_z$ wherein $0<x\leq4$, $0<y\leq4$, and $0<z\leq4$, $Se_x$-$Sb_y$-$Te_z$ wherein $0<x\leq4$, $0<y\leq4$, and $0<z\leq4$, $Ge_x$-$Sb_y$-$Te_z$ wherein $0<x\leq4$, $0<y\leq4$ and $0<z\leq4$, $Ge_x$-$Sb_y$-$Se_z$-$Te_k$ wherein $0<x\leq4$, $0<y\leq4$, $0<z\leq4$ and $0<k\leq4$, or a combination thereof.

11. The anode of any of claims 1-10, further comprising a second anode active material layer between the three-dimensional porous current collector and the first anode active material layer,
wherein the second anode active material layer comprises a second metal material, and the second metal material is lithium, a second metal, a lithium alloy, or a combination thereof.

12. A solid-state secondary battery comprising:

a cathode;
the anode of any of claims 1-11; and
a solid electrolyte between the cathode and the anode;
preferably wherein the solid-state secondary battery has a cell thickness change of 25 percent or less.

13. A method of preparing a solid-state secondary battery, the method comprising:

providing a three-dimensional porous current collector, which has a porosity of 10 percent to 99 percent, based on a total volume of the three-dimensional current collector, and comprises a plurality of pores extending along a thickness direction,
wherein pores of the plurality of the pores have a size and a pitch and a ratio of the size to the pitch is 0.1 to 0.9;
disposing a first anode active material layer on a first side of the three-dimensional porous current collector to prepare an anode;
providing a cathode;
disposing a solid electrolyte on the cathode; and
disposing the anode on the solid electrolyte opposite the cathode
wherein the first anode active material layer faces the solid electrolyte, to prepare the solid-state secondary battery.

14. The method of claim 13,

wherein the first anode active material layer on the first side of the three-dimensional porous current collector is a first portion, and
further comprising disposing a second portion of the first anode active material layer on the solid electrolyte, wherein
the first portion of the first anode active material layer disposed on the three-dimensional porous current collector has a first thickness,
the second portion of the first anode active material layer disposed on the solid electrolyte has a second thickness, and
the first thickness is greater than the second thickness.

15. The method of claims 13 or 14, wherein the providing of the three-dimensional porous current collector comprises laser drilling.

FIG. 1A

# FIG. 1B

FIG. 2

# FIG. 3

# FIG. 4

Legend:
- 0.3mA/cm²
- 0.5mA/cm²
- 1.0mA/cm²
- 1.6mA/cm²

X-axis: CAPACITY PER UNIT AREA (mAh/cm²)
Y-axis: E (Volts)

FIG. 5

# FIG. 6A

# FIG. 6B

# FIG. 6C

# FIG. 7A

FIG. 7B

# FIG. 7C

# FIG. 7D

# FIG. 7E

FIG. 8A

100µm

FIG. 8B

100μm

Europäisches
Patentamt

European
Patent Office

Office européen
des brevets

## EUROPEAN SEARCH REPORT

**Application Number**

**EP 23 20 5214**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/158226 A1 (CHANG WONSEOK [KR] ET AL) 19 May 2022 (2022-05-19) <br> * claims 1,6,8-11 * <br> ----- | 1,12,13 | INV. <br> H01M4/66 <br> H01M4/70 <br> H01M4/74 <br> H01M4/76 <br> H01M4/80 |
| A | CN 103 490 041 B (AMPEREX TECHNOLOGY LTD) 10 February 2016 (2016-02-10) <br> * examples 1-17 * <br> ----- | 1-15 | |
| A | KR 2021 0011041 A (SK INNOVATION CO LTD [KR]) 29 January 2021 (2021-01-29) <br> * paragraphs [0045] - [0051] * <br> * paragraphs [0059] - [0067]; example 1 * <br> * figures 1,2 * <br> ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 8 March 2024 | González Junquera, J |

EPO FORM 1503 03.82 (P04C01)

## ANNEX TO THE EUROPEAN SEARCH REPORT
## ON EUROPEAN PATENT APPLICATION NO.

EP 23 20 5214

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2024

| Patent document cited in search report | Publication date | Patent family member(s) | Publication date |
|---|---|---|---|
| US 2022158226 A1 | 19-05-2022 | EP 4002517 A1<br>KR 20220069150 A<br>US 2022158226 A1 | 25-05-2022<br>27-05-2022<br>19-05-2022 |
| CN 103490041 B | 10-02-2016 | NONE | |
| KR 20210011041 A | 29-01-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRUNAUER, STEPHEN ; EMMETT, P. H. ; TELLER, EDWARD.** Adsorption of Gases in Multimolecular Layers. *Journal of the American Chemical Society,* 1938, vol. 60 (2), 309-319